# EUROPEAN PATENT APPLICATION

(11) **EP 4 825 291 A2**
(43) Date of publication of application: **21.10.2026**
(21) Application number: 26203262.6
(22) Date of filing: 29.06.2023
(51) Int. Cl.: A47L 5/24, A47L 5/28, A47L 9/28, A47L 9/32, A47L 9/10, A47L 9/12

(54) **VACUUM CLEANER**

(30) Priority: 29.06.2022 GB 202209550; 29.06.2022 GB 202209558; 29.06.2022 GB 202209564
(62) Document number(s) of the earlier application(s) in accordance with Art. 76 EPC: 23738176.9 / 4 547 075
(71) Applicant: DYSON TECHNOLOGY LIMITED, Malmesbury Wiltshire SN16 0RP (GB)
(72) Inventor: COLE, Samuel, Malmesbury, SN16 0RP (GB); KOCH, Stefan, Malmesbury, SN16 0RP (GB); NEWTON, David, Malmesbury, SN16 0RP (GB); SCHNEIDER, Nicholas, Malmesbury, SN16 0RP (GB); LEE, Kent Been, Malmesbury, SN16 0RP (GB); LIONG, Yiu Zhi, Malmesbury, SN16 0RP (GB); MOHD ROSMIZI, Ab Rashid, Malmesbury, SN16 0RP (GB); YACOB, Noor Fareha, Malmesbury, SN16 0RP (GB); CHIA, Xin Tong, Malmesbury, SN16 0RP (GB); WONG, Han Hua, Malmesbury, SN16 0RP (GB); LIM, Taylor, Malmesbury, SN16 0RP (GB); COX, Gregory, Malmesbury, SN16 0RP (GB); GONCALVES, Jorge, Malmesbury, SN16 0RP (GB); SAMUELS, Benedict, Malmesbury, SN16 0RP (GB); VUIJK, Remco, Malmesbury, SN16 0RP (GB); WHITE, Harriet, Malmesbury, SN16 0RP (GB); JONES, Daniel, Malmesbury, SN16 0RP (GB)
(74) Representative: Dyson IP Department

(57) **Abstract**

A separation system for a vacuum cleaner is described. The separation system comprises: a bin body; a chamber formed by an internal volume of the bin body, the chamber having an airflow inlet; a valve for controlling airflow through the airflow inlet into the chamber; and a filter assembly disposed in the chamber for filtering airflow from the airflow inlet. The valve covers at least a portion of a base of the chamber, and the airflow inlet is provided in a plane of the valve such that the airflow enters the chamber at the valve. The valve is moveable to a first open position in response to airflow through the separation system to enable airflow to enter the chamber via the airflow inlet, and the valve is moveable to a second open position in response to movement of the bin body to allow debris collected within the chamber to pass the valve.

## Description

### BACKGROUND

Vacuum cleaners rely on a suction generator to generate an airflow, which is used to pick up dirt from a surface to be cleaned. The airflow is passed through one or more separation stages to separate dirt from the airflow before the airflow is ejected from the vacuum cleaner. Some vacuum cleaners are so-called "handheld" vacuum cleaners, with the user able and intended to support a main unit of the vacuum cleaner in their hand in use. Some vacuum cleaners may also be battery-powered, such that they do not need to be plugged into a mains electrical supply to be used.

### SUMMARY

The present invention provides a separation system for a vacuum cleaner, the separation system comprising: a chamber having an airflow inlet; a valve for controlling airflow through the airflow inlet into the chamber; and a filter assembly disposed in the chamber for filtering airflow from the airflow inlet, wherein: the valve covers at least a portion of a base of the chamber; the airflow inlet is provided in a plane of the valve such that the airflow enters the chamber at the valve; the valve is moveable to a first open position in response to airflow through the separation system to enable airflow to enter the chamber via the airflow inlet; and the valve is moveable to a second open position in response to movement of the bin body to allow debris collected within the chamber to pass the valve.

According to an embodiment, the filter assembly extends along a length direction and has a generally U-shaped cross-sectional shape, when viewed along the length direction. An upstream surface of the filter assembly provides a generally U-shaped airflow channel for the bulk airflow from the air inlet.

According to an embodiment, a curvature of the filter assembly is relatively shallow such that free ends of the U-shaped cross-sectional shape face generally away from one another. The filter assembly has a length in the length direction of 28cm.

According to an embodiment, the filter assembly extends in a first direction; and wherein the separation system is configured such that, in use: a bulk airflow from the airflow inlet into the chamber is in a second direction which is substantially parallel to the first direction; and the bulk airflow from the airflow inlet flows through the filter in a direction orthogonal to the first direction.

According to an embodiment, the filter assembly comprises a first filter and a second filter, the second filter being arranged with respect to the first filter such that air flows through and is filtered by the second filter after having flowed through and been filtered by the first filter, the second filter extending in a third direction parallel to the first and the second directions. The second filter is positioned to underlie the first filter.

According to an embodiment, in use, a direction of airflow through the second filter is generally orthogonal to the third direction.

According to an embodiment, the second filter has a cross-sectional shape, when viewed along the third direction, which is different to a cross-sectional shape of the first filter, when viewed along the first direction. The second filter has a substantially flat cross-sectional shape, when viewed along the third direction.

According to an embodiment, the separation system further comprises an outlet channel into which, in use, a filtered airflow flows after flowing through the filter assembly, wherein the outlet channel is positioned to underlie the filter assembly. The outlet channel extends in a fourth direction which is parallel with and offset from the first and second directions.

According to an embodiment, the filter assembly comprises an upstream face which is downstream of the airflow inlet, and the chamber comprises a longitudinal axis; and wherein the upstream face of the filter assembly is asymmetrically disposed in the chamber with respect to the central longitudinal axis. The upstream face of the filter assembly is spaced from and faces towards the central longitudinal axis of the chamber.

According to an embodiment, the separation system comprises a bin assembly, and a core, wherein the bin assembly comprises the bin body and a bin interlock member, and wherein the bin interlock member is configured to inhibit removal of the bin body from the core when a cleanerhead is attached to the vacuum cleaner.

The present invention also provides a vacuum cleaner comprising the separation system.

### BRIEF DESCRIPTION OF THE DRAWINGS

Figure 1 is a perspective view of a vacuum cleaner;
Figure 2 is perspective view of the vacuum cleaner located in a dock;
Figure 3 is a perspective view of a main unit of the vacuum cleaner with a see through bin body;
Figure 4 is an exploded view of the main unit;
Figure 5 is a perspective of a separation system of the main unit;
Figure 6 is a cross-sectional view through a bin assembly of the separation system;
Figure 7 is an exploded view of the bin assembly;
Figure 8 is a perspective view of a wiper of the bin assembly;
Figure 9 is a perspective cross sectional view of a wiper of the bin assembly;
Figure 10 is a schematic view illustrating a cleanerhead interlocking system for use in the vacuum cleaner;
Figure 11 is a perspective view of a filter assembly of the separation system;
Figure 12 is a cross-sectional view of the filter assembly;
Figure 13 is a cross-sectional view of another the filter assembly assembled to the core with the bin body;
Figure 14 is an exploded view of the filter assembly;
Figure 15 is a perspective view of the filter assembly partly disassembled;
Figure 16 is a perspective view of a core of the separation system with an auxiliary mesh;
Figure 17 is a perspective view of a core of the separation system without the auxiliary mesh;
Figure 18 is a cross-sectional view through the core;
Figure 19 is a first side view of a valve assembly of the separation system;
Figure 20 is an upstream perspective view of the valve assembly;
Figure 21 is a downstream perspective view of the valve assembly;
Figure 22 is a schematic illustration of operation of the valve assembly;
Figure 23 is an exploded view of a motor assembly of the main unit;
Figure 24 is a perspective view of the motor assembly;
Figure 25 is a perspective view of a motor housing of the motor assembly;
Figure 26 is another perspective view of a motor housing of the motor assembly showing an insert for the battery assembly;
Figure 27 is a first schematic cross-sectional view through the motor assembly;
Figure 28 is a second schematic cross-sectional view through the motor assembly;
Figure 29 is a schematic view of a suction motor of the motor assembly;
Figure 30 is a perspective view of a motor mount of the motor assembly;
Figure 31 is an exploded view of user interface of the motor assembly;
Figure 32 is a cross-sectional view illustrating user interface of the motor assembly;
Figure 33 is a cross-sectional view illustrating a housing insert of the motor assembly;

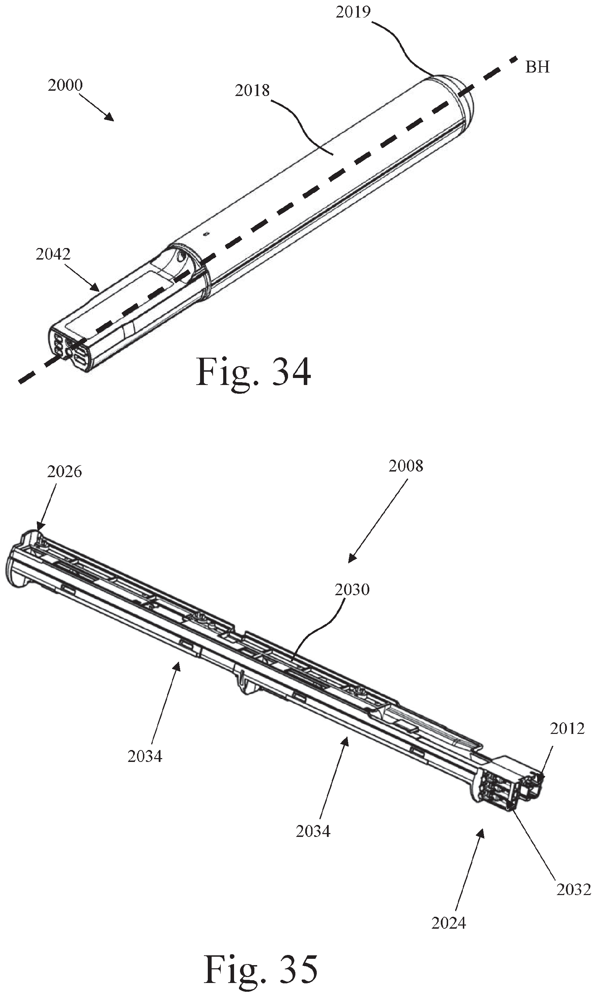

Figure 34 is a perspective view of a battery assembly of the main unit;
Figure 35 is a perspective view of a battery chassis of the battery sub-assembly;

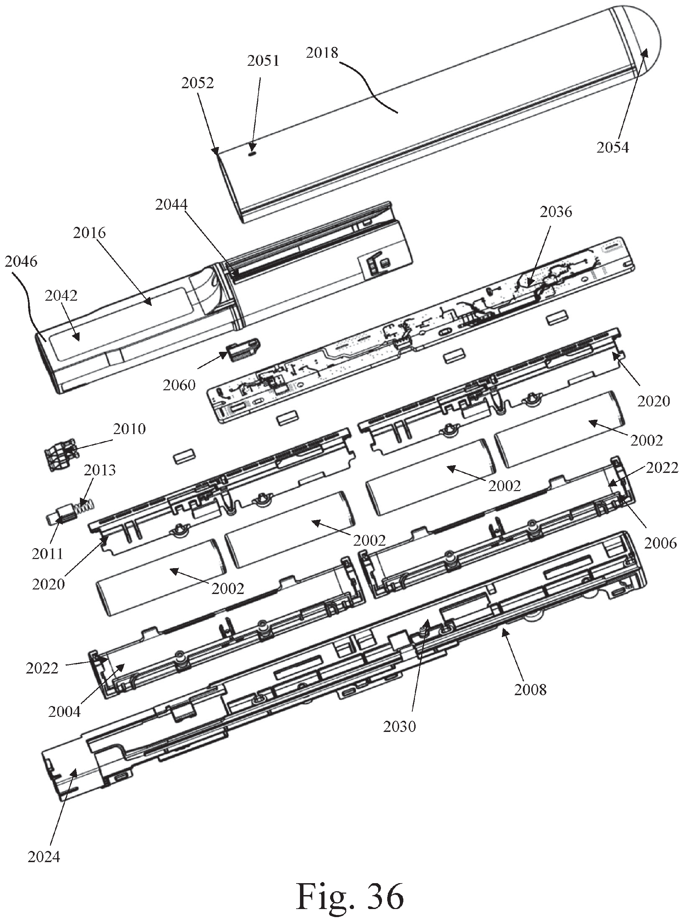

Figure 36 is an exploded view of a battery sub-assembly of the battery assembly;

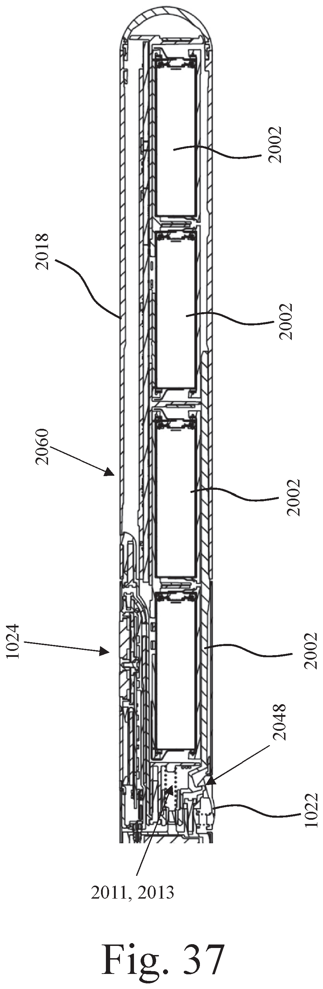

Figure 37 is a cross-sectional view through the battery assembly;
Figure 38 is a perspective view of a cleanerhead of the vacuum cleaner;
Figure 39 is a side view of the cleanerhead;
Figure 40 is a schematic view of a neck portion of the cleanerhead;
Figure 41 is a schematic underside view of the cleanerhead;
Figure 42 is an exploded view of the dock;
Figure 43 is a rear perspective view of the dock;
Figure 44 is a side view of the dock with the cleanerhead;
Figure 45 is a side view of the main unit positioned vertically relative to a horizontal surface to be cleaned;
Figure 46 is a side view of the vacuum cleaner positioned vertically relative to a horizontal surface to be cleaned;
Figure 47 is a front view of the vacuum cleaner positioned vertically relative to a horizontal surface to be cleaned;
Figure 48 is a schematic view illustrating airflow through the main unit in use viewed from the side of the vacuum cleaner; and
Figure 49 is a schematic view illustrating airflow through the main unit in use viewed from the front of the vacuum cleaner.

### DETAILED DESCRIPTION

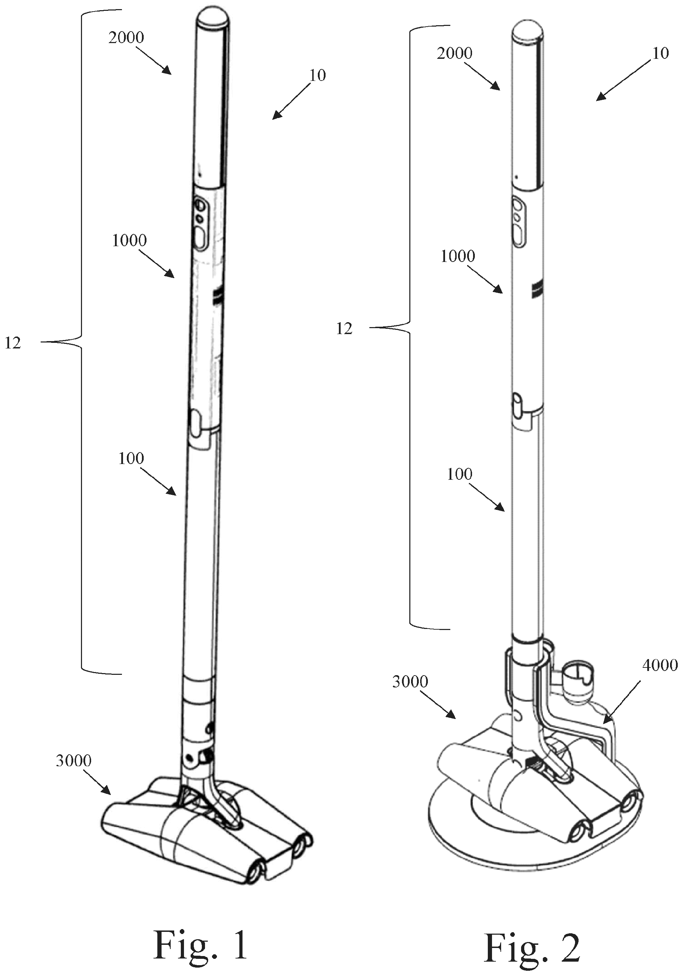

A vacuum cleaner 10 is illustrated in Figures 1 and 2, without and with a dock.

The vacuum cleaner 10 comprises a main unit 12, and a cleanerhead 3000. The vacuum cleaner 10 is a so-called "handheld" vacuum cleaner, with the user able and intended to support the main unit 12 in their hand in use, and is battery-powered. A dock 4000 may be provided to hold the vacuum cleaner 10 when not in used, as shown in figure 2.

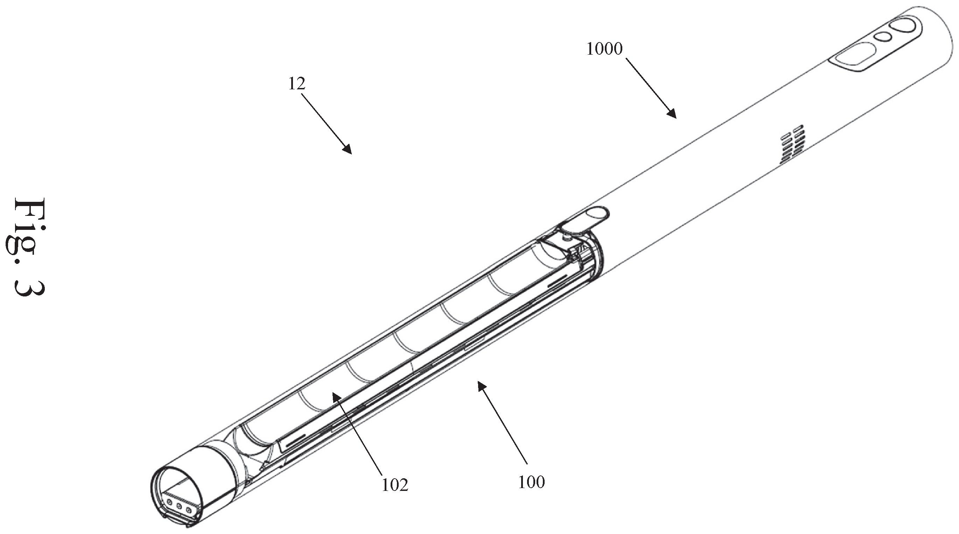

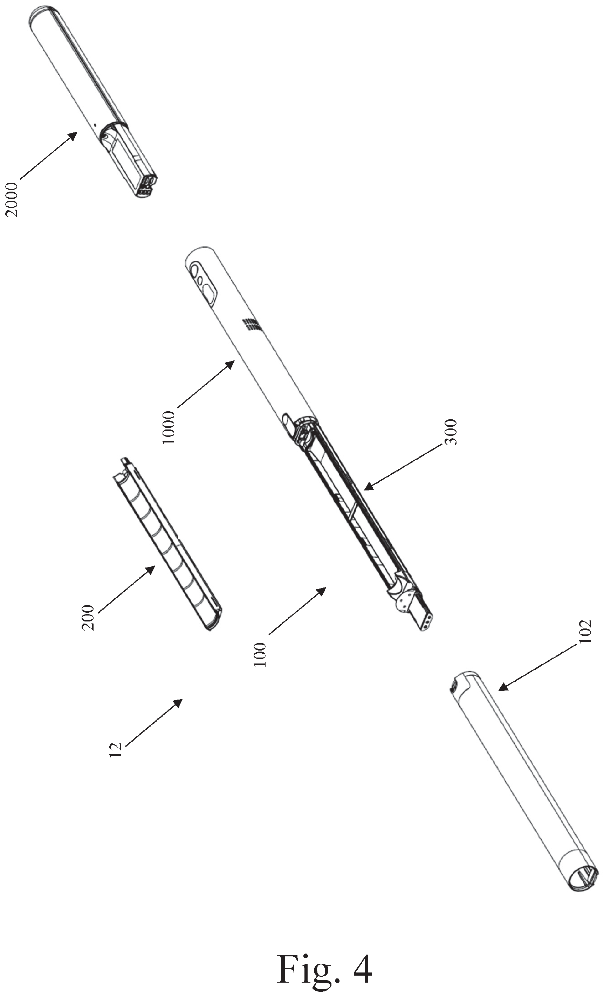

The main unit 12 is illustrated in isolation in Figures 3 and 4, and comprises a separation system 100, a motor assembly 1000, and a battery assembly 2000.

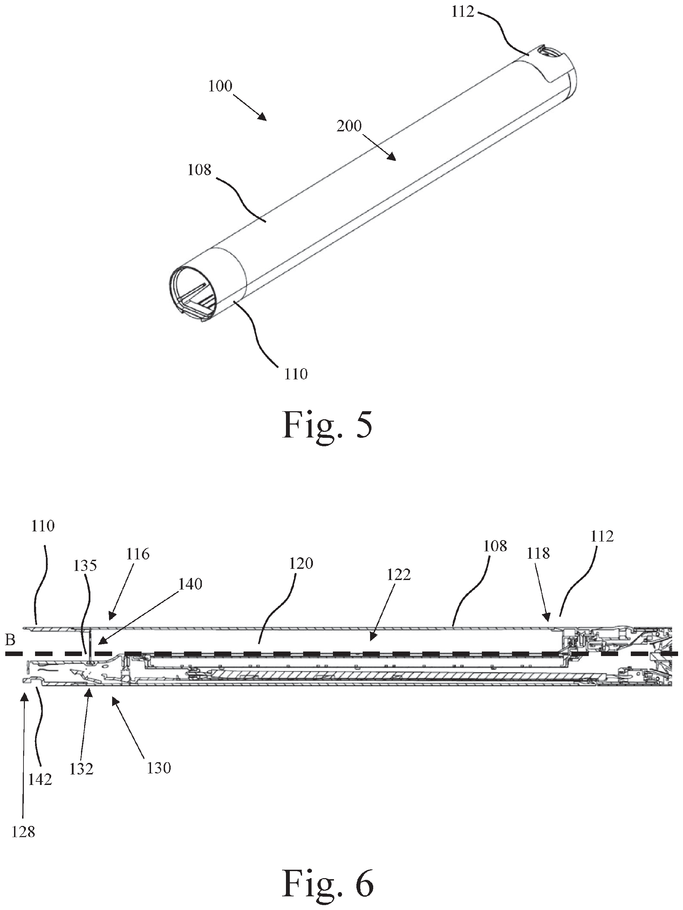

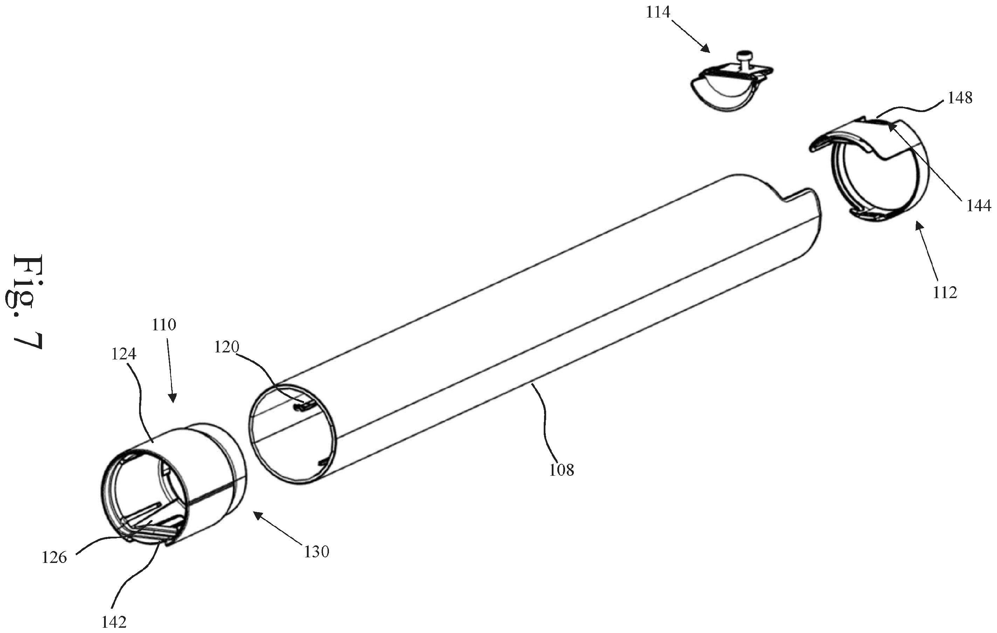

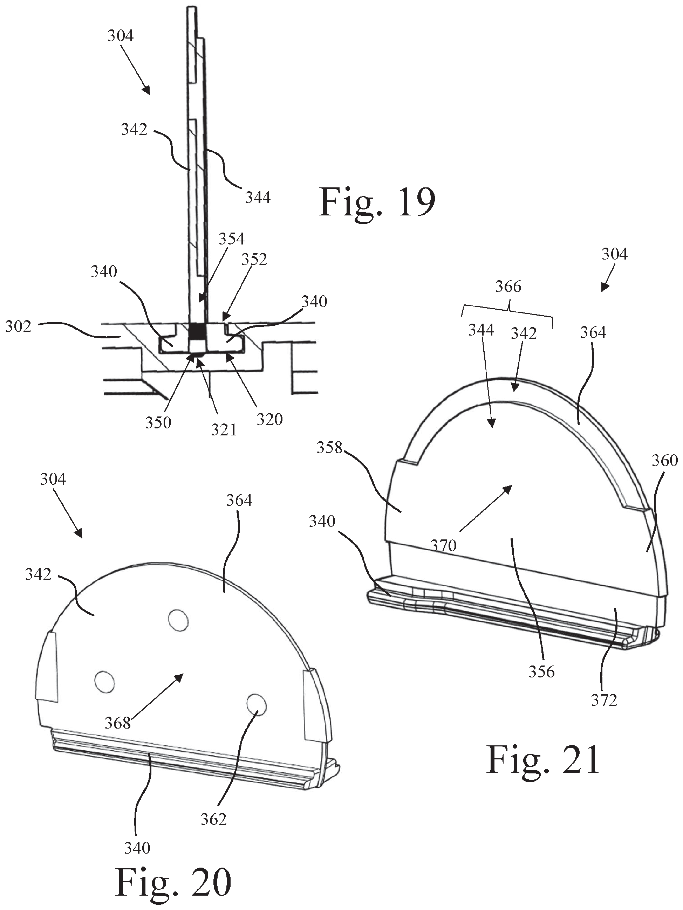

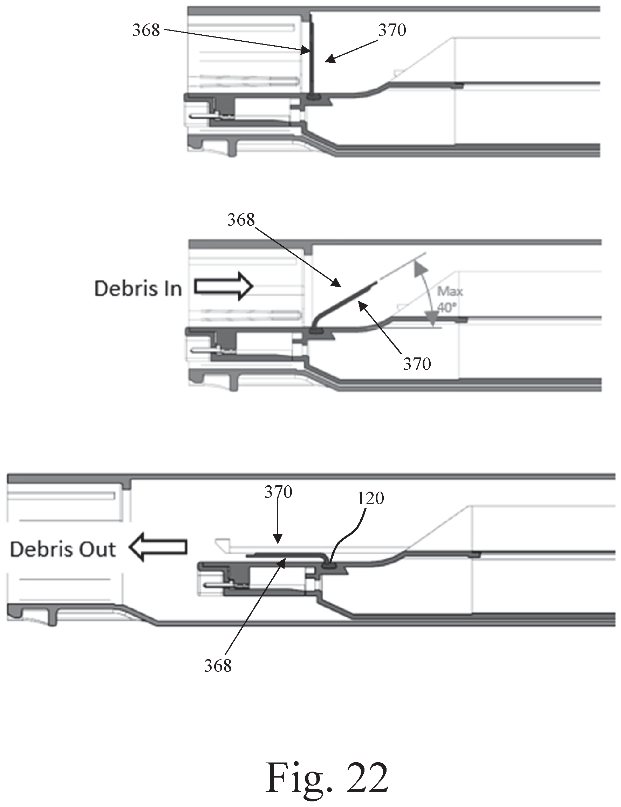

The separation system 100 is shown in Figures 5 to 22, and comprises a bin assembly 102, a filter assembly 200, and a core 300.

The bin assembly 102 comprises a bin body 108, a first connecting cuff 110, a second connecting cuff 112, a wiper 114, and a bin interlock member 115.

The bin body 108 is elongate and generally cylindrical in form, and comprises a first end 116, a second end 118, and a pair of guide rails 120. The bin body 108 is hollow, with an internal volume of the bin body 108 defining a debris collection chamber 122 of the separation system 100. The debris collection chamber 122 has a substantially constant cross-sectional area in a region corresponding to the filter assembly 200, when the filter assembly 200 is attached to the core 300 and located within the bin body 108. The bin body 108 has an outer diameter of around 38mm, although diameters in the region of 35mm to 50mm or other diameters are also envisaged. The bin body 108 has an axial length of around 38cm measured in a direction substantially parallel to a central bin axis B of the bin body 108. Thus a ratio of the diameter of the bin body 108 to the axial length of the bin body 108 is 0.01 (i.e. 38/3800). In other words, the diameter of the bin body 108 is about 1% of the length of the axial length of the bin body 108. The bin body 108 is formed of plastic material, and is generally transparent. However, one skilled in the art will recognise that materials other than plastic can be used without departing from the art. The bin body 108 defines a separator housing of the separation system 100.

The guide rails 120 are generally elongate and linear in form, and extend along an interior surface of the bin body 108 in a direction substantially parallel to the central bin axis B of the bin body 108. The guide rails 120 are integrally formed with the bin body 108 as part of a same moulding process. The guide rails 120 are disposed diametrically opposite one another, and are in a common plane with the central bin axis B of the bin body 108.

The guide rails 120 extend between the first 116 and second 118 ends of the bin body 108, with the guide rails 120 spaced from a periphery of the first end 116 of the bin body 108 by a certain length in a direction parallel to the central bin axis B. This length is determined by the dimension of the valve assembly 304 to accommodate the valve assembly 304 to transition between the open and close position. Thus each of the guide rails 120 has an axial length, measured in a direction parallel to the central bin axis B, of around 30cm. Each of the guide rails 120 has a radial extent such that the guide rails protrude into the debris collection chamber 122 by a distance of about 5mm. The bin body 108 is slidably attached to the core 300 via the guide rails 120 and guide surfaces 332 of the core 300.

The first connecting cuff 110 is located at the first end 116 of the bin body 108, and is shaped and dimensioned such that a free end 3030 of a neck portion 3004 of the cleanerhead 3000 can be received within the first connecting cuff 110. The first connecting cuff 110 comprises a curved portion 124 and an engagement lip 142 shaped and dimensioned to selectively engage with a cleanerhead catch 3040 of the neck portion 3004 of the cleanerhead 3000, as will be discussed in more detail below and has a circular cross-sectional shape when viewed in a plane orthogonal to the central bin axis B. An end 130 of the first connecting cuff 110, proximal to the bin body 108, has a circular cross-sectional shape when viewed in a plane orthogonal to the central bin axis B. The curved portion 124 has a diameter of around 38mm although diameters in the region of 35mm to 50mm or other diameters are also envisaged.

A planar surface 126 is provided which is shaped and dimensioned to underlie an electrical connection portion 318 of the core 300 when the bin body 108 is located about the core 300. A gap 136 is located between the bottom surface of the core 300 and the bin body 108. The gap 136 is provided such that the free end 3030 of the neck portion 3004 of the cleanerhead 3000 can be received in the gap 136, as will be discussed on more detail hereinafter.

The first connecting cuff 110 partly defines an airflow inlet 140 of the separation system 100.

The second connecting cuff 112 is located at the second end 118 of the bin body 108, and is generally cylindrical and hollow in form. An outer diameter of the second connecting cuff is around 38mm, although diameters in the region of 35mm to 50mm or other diameters are also envisaged. The second connecting cuff 112 comprises a bin catch receiving portion 144, and two internal ribs 146.

The bin catch receiving portion 144 is located at an opposite side of the bin body 108 to the engagement lip 142 of the first connecting cuff 110. The bin catch receiving portion 144 comprises a latching member 148 that is shaped and dimensioned to engage with a bin catch 1040 of the motor housing 1002 of the motor assembly 1000, as will be described in more detail hereinafter. The bin catch receiving portion 144 takes a different form to the engagement lip 142 of the first connecting cuff 110.

The internal ribs 146 are formed on an inner surface of the second connecting cuff 112, and are spaced diametrically opposite to one another whilst being in a common plane with the central bin axis B. The internal ribs 146 extend along the length of the second connecting cuff 112, and are positioned such that the internal ribs 146 are substantially contiguous with the guide rails 120 at the second end 118 of the bin body 108.

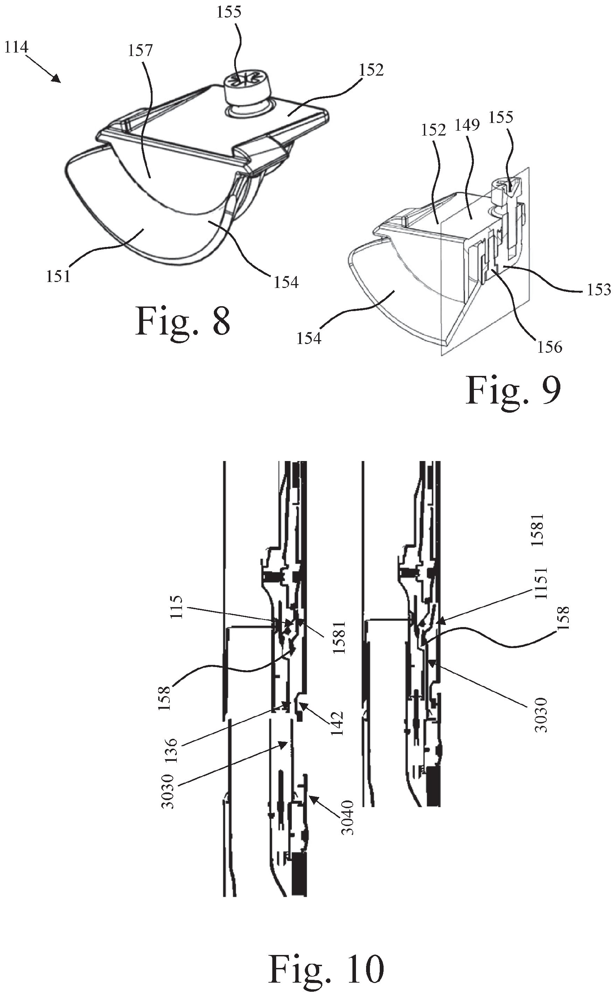

The wiper 114 is shown in Figures 8 and 9, and comprises a first portion 154 and a second portion 152 being secured by a screw 156. Another screw 155 is provided to secure the wiper 114 to the second connecting cuff 112. The first portion 154 comprises a curved exposed wiping blade 151 that is shaped and dimensioned to substantially correspond to a primary mesh 202 of the filter assembly 200. The first portion 154 further comprises a mounting surface 153. The second portion 152 comprises a wall 157 which is generally semi-circular in cross-sectional shape when viewed in a plane orthogonal to the central bin axis B. The second portion 152 further comprises a mounting surface 149. Screw 156 is provided to secure the first portion 154 and second portion 152 together via respective mounting surfaces 153 and 149. The wiping 114 is formed of rubber or any materials suitable for wiper the surface of the primary mesh 202.

The bin interlock member 115 is illustrated schematically in Figure 10, and comprises a first engagement end 158 and a second engagement end 1581 opposing the first engagement end 158. The bin interlock member 115 is formed of a resiliently deformable material, and is fixed to the core 300 such that the first engagement end 158 and second engagement end 1581 are freely floating. The first engagement end 158 defines an angled contact surface for contacting the free end 3030 of the neck portion 3004 of the cleanerhead 3000. When the cleanerhead 3000 is inserted into the first connecting cuff 110, the engagement lip 142 engages with the cleanerhead catch 3040 of the neck portion 3004 and at the same time, the free end 3030 of the neck portion 3004 of the cleanerhead 3000 engages the first engagement end 158 causing the bin interlock member 115 to pivot such that the second engagement end 1581 moves towards the bin body 108 and abutting a recess 1151 of the bin body preventing the bin body from further movement. In the absence of an applied force, the first engagement end 158 of the bin interlock member 115 is generally aligned with the gap 136 between the core 300 and the bin body 108 while the second engagement end 1581 is not in contact with the bin body 108.

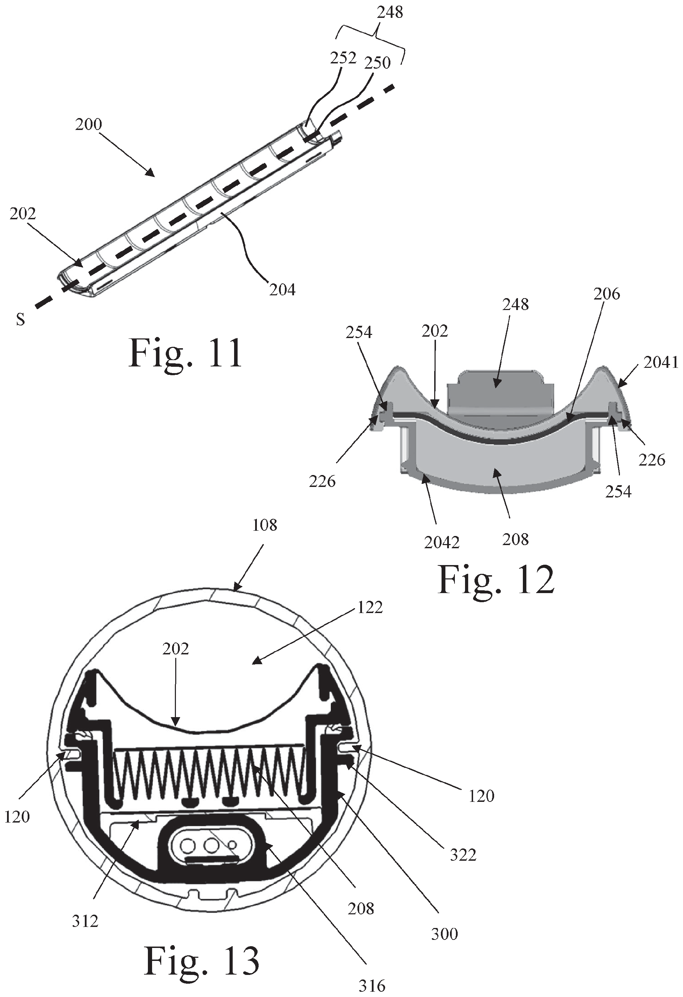

The filter assembly 200 is shown in Figures 11 to 15, and comprises a primary mesh 202, a carrier 204, a cage 206, a filter media 208. The carrier 204 comprises an upper tray 2041 and a lower tray 2042. In view of the nature of the filter assembly 200, the separation system 100 may be considered a non-cyclonic separation system. The primary mesh 202 and the filter media 208 can be considered to comprise first and second separation mechanisms, respectively.

The filter assembly 200 is made up of primary mesh 202 and a filter media 208. The primary mesh 202 acts as the primary level of separation and target to capture particles greater than 350um. This equates to about 70% of the dust. Whereas the filter media 208 captures all the particles less than 350um in size. A lot of this dust will sit in between the primary mesh 202 and filter media 208. There is a need to ensure that the user is not exposed to this trapped dust during the filter removal process, for both hygiene and product safety reasons. It is also found to be important to the filter performance over life that the filter media 208 is wash independently from the primary mesh 202 during the wash process. This ensures more effective washing and a shorter dry time. Hence, the primary mesh 202 and filter media 208 are secured by the upper tray 2041 and lower tray 2042 separately with a predetermined clearance between the upper and lower trays to trap as much dust particles less than 350um in size in between the primary mesh 202 and filter media 208. In an embodiment, the predetermined clearance is about 1.5mm. The clearance between the upper 2041 and lower 2042 trays fully encapsulate the small particles resulting in minimal dust being displayed onto the surrounding parts during a filter removal step. Even if the filter assembly is exposed to rigorous movement and rotated upside down, the majority of the dust remains encapsulated between the upper 2041 and lower 2042 trays.

The upper 2041 and lower 2042 trays are secured together in normal use and during the filter assembly removal process but are then able to be separated once free from the rest of the vacuum cleaner.

The primary mesh 202 acts to filter coarse debris from airflow in use, and hence may also be referred to as a filter, or indeed a coarse filter. In some examples, the primary mesh 202 is referred to as a first filter. The primary mesh 202 is formed of metal such as aluminium or other metal material, and comprises through-holes distributed along the length of the primary mesh 202. Each through-hole has chamfered edges, and has a diameter of about 350um. Thus, dust particles greater than 350um would be prevented from going through the primary mesh 202. This means that most of the dust particles would be trapped in the dust chamber defined between the primary mesh 202 and the bin body 108.

The primary mesh 202 has a generally U-shaped cross-sectional shape when viewed in a plane orthogonal to a longitudinal separator axis S. In other words, the primary mesh 202 has a generally U-shaped cross-sectional shape when viewed along a length direction of the primary mesh 202. The curvature of the primary mesh 202 is such that free ends of the U-shaped cross-sectional shape face away from one another, and hence the primary mesh 202 has a relatively shallow curvature. The primary mesh 202 has an axial length of around 28cm measured in a direction parallel to the longitudinal separator axis S. A trough formed by an upstream surface of the primary mesh 202 forms an airflow channel for a bulk airflow from the airflow inlet. The upstream surface of the primary mesh 202 may also be referred to as a primary surface.

The upper tray 2041 comprises first 214 and second 216 end walls, first 218 and second 220 edge walls, and seven cross-members 222. The first 214 and second 216 end walls each have curved upper surfaces which are shaped and dimensioned such that the primary mesh 202 sits upon the curved upper surfaces. Each of the first 214 and second 216 end walls has a certain area that underlies the primary mesh 202. The first end wall 214 comprises an end wall clip 224 shaped and dimensioned to engage with a corresponding end wall lip 246 of a first end wall 234 of the lower tray 2042. The second end wall 216 is shaped and dimensioned to abut a core connection portion 248 of the lower tray 2042. When the upper and lower trays are slidably coupled together, the end wall clip 224 engage with the end wall lip 246 and together can be inserted into corresponding grooves provided on the core 300 and further moving the core connection portion 248 to engage with the locating channel 311 of the core 300, locks the filter assembly to the core 300.

The first 218 and second 220 edge walls extend outwardly from the first 214 and second 216 end walls, and define tracks 226 that are shaped and dimensioned to be slidably received within corresponding track channels 254 of the lower tray 2042. The first 218 and second 220 edge walls have an axial curve length of around 31mm and hence have the same axial extent as the primary mesh 202.

The cross-members 222 each extend between the first 218 and second 220 edge walls, and are curved to correspond to a curvature of the primary mesh 202. The cross-members 222 are evenly spaced along the axial length of the first 218 and second 220 edge walls, and define support surfaces on which the primary mesh 202 sits. Each cross-member 222 underlies the primary mesh 202. The cross-members 222 act to divide the primary mesh 202 into eight subareas.

The cage 206 is curved about an axis substantially parallel to the longitudinal separator axis S, such that the cage 206 has a generally U-shaped cross-sectional shape when viewed in a plane orthogonal to the longitudinal separator axis S. The cage 206 is shaped and dimensioned to underlie the upper tray 2041, and to overlie the filter media 208. The cage 206 has a width, measured in a direction orthogonal to the longitudinal separator axis S, that corresponds to the filter media 208. The cage 206 comprises a repeating pattern of cut-outs 228, with the pattern repeated throughout the length of the filter media 208.

The filter media 208 is any form of filter media commonly use in vacuum cleaner, and comprises a filter media main body 230 and filter wings 232. The filter media main body 230 has a width, measured in a first direction orthogonal to the longitudinal separator axis S, of around 30mm and such that the filter media main body 230 can be received within a filter media chamber 244 of the lower tray 2042. The filter media main body 230 has a thickness, measured in a second direction orthogonal to the longitudinal separator axis S and orthogonal to the first direction, such that the filter media main body 230 can be received within the filter media chamber 244 of the lower tray 2042.

The filter wings 232 extend from opposing sides of a top end of the filter media main body 230, with each filter wing 232 extending from the filter media main body 230. The filter wings 232 also extend axially from ends of the filter media main body 230. The filter wings 232 are shaped and dimensioned to overlie part of an upper rim 242 of the lower tray 2042, and are shaped and dimensioned to lie between track channels 254 of the lower tray 2041. The form of the filter media main body 230 and the filter wings 232 is such that the filter media 208 has a generally T-shaped cross-sectional shape when viewed in a plane orthogonal to the longitudinal separator axis S, albeit curved slightly about the longitudinal separator axis S.

The lower tray 2042 comprises a first end wall 234, a second end wall 236, sidewalls 238 extending between the first end 234 and the second end 236, three cross-members 240 extending between the sidewalls 238, and an upper rim 242.

The first end wall 234 and the second end wall 236 each have a width, in a direction orthogonal to the longitudinal separator axis S. The sidewalls 238 each have a length, in a direction parallel to the longitudinal separator axis S. Collectively, the first 234 and second 236 end walls, the sidewalls 238, and the cross-members 240, define a filter media chamber 244. The filter media chamber 244 is shaped and dimensioned to receive the filter media main body 230 of the filter media 208.

The upper rim 242 is formed on upper surfaces of the first 234 and second 236 end walls, and the sidewalls 238, and extends outwardly to overhang the first 234 and second 236 end walls, and the sidewalls 238. A first portion of the upper rim 242 corresponding to the first end wall 234 defines an end wall lip 246 to releasably engage with the end wall clip 224 of the first end wall 214 of the mesh carrier 204. A second, opposite, portion of the upper rim 242 corresponding to the second end wall 236 comprises a core connection portion 248.

The filter media 208 is inserted into the filter media chamber 244 and an ultrasonic welding is applied to weld the filter media 208 into the filter media chamber 244. Thereafter, the cage 206 is arranged on top of the filter media 208 and a further ultrasonic welding is applied to weld the cage to the lower tray 2042 enclosing the filter media 208 between the lower tray 2042 and the cage 206. Particularly, the cage 206 is welded to the upper rim 242 of the lower tray 2042.

The core connection portion 248 comprises a locating projection 250, and upstanding walls 252. The locating projection 250 is shaped and dimensioned to be received within a locating channel 311 of the core 300. The locating projection 250 has a different form to the end wall clip 224, such that the end wall clip 224 cannot be located within the locating channel 311. Thus the filter assembly 200 may be asymmetric about an axis orthogonal to the longitudinal separator axis S, and may define a poka-yoke arrangement. The upstanding walls 252 have a height, in a direction orthogonal to the longitudinal separator axis S, such that with the filter assembly 200 assembled, the upstanding walls 252 are substantially contiguous with the second end wall 216 of the mesh carrier 204.

Portions of the upper rim 242 corresponding to the sidewalls 228 comprise track channels 254 that are shaped and dimensioned to slidably receive the tracks 226 of the first 218 and second 220 edge walls of the mesh carrier 204.

Figure 13 shows another embodiment of the lower tray 2042 where the filter media 208 is a pleated media filter with a rectangular cross-sectional shape when viewed in a plane orthogonal to the longitudinal separator axis S.

The filter media 208 may be a hygroscopic media so that when the hygroscopic media is wet, it will swell beyond or through the openings of the cage 206 causing an interference between lower and upper trays 2041 and 2042 to prevent a wet or damp filter being attached or inserted to the core 300. In other words, if the hygroscopic media is wet, the hygroscopic media will swell through the openings of the cage preventing the lower tray 2042 from being able to slidably coupled to the upper tray 2041. Furthermore, a hydrochromic indicator can be applied on a surface of the filter media 208 acting as a visual aid for user to know if the filter media is wet or dry. For example, the hydrochromic indicator can be applied on the bottom surface of the filter media 208 such that when the filter media 208 is wet, the hydrochromic indicator is exposed through the sections defined by the three cross-members 240.

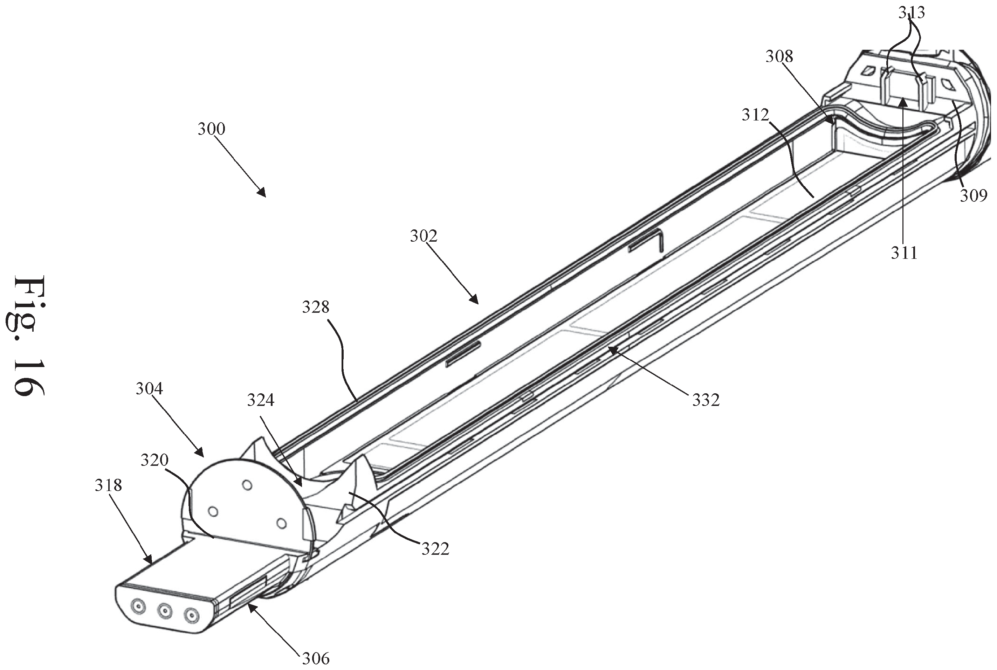

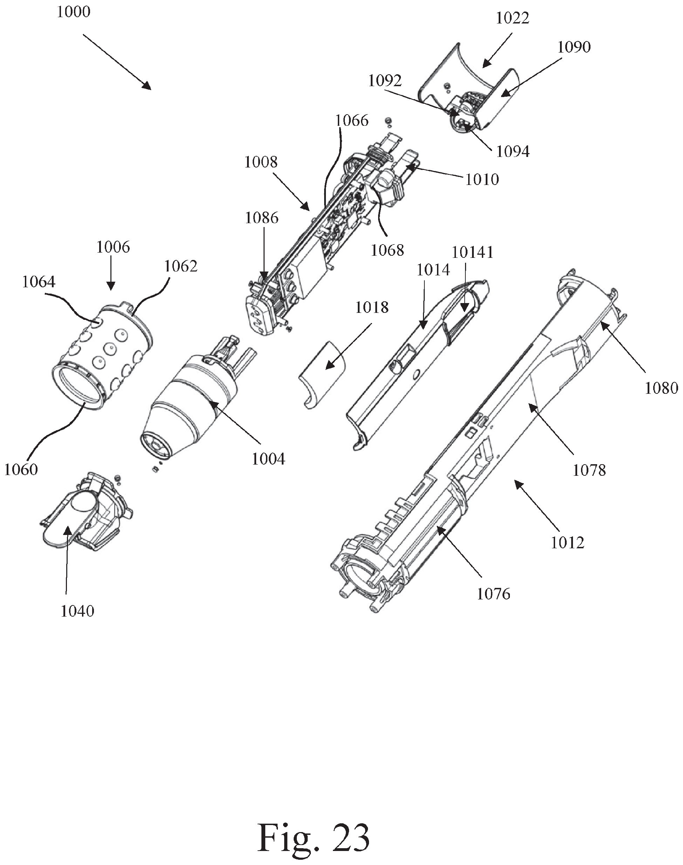

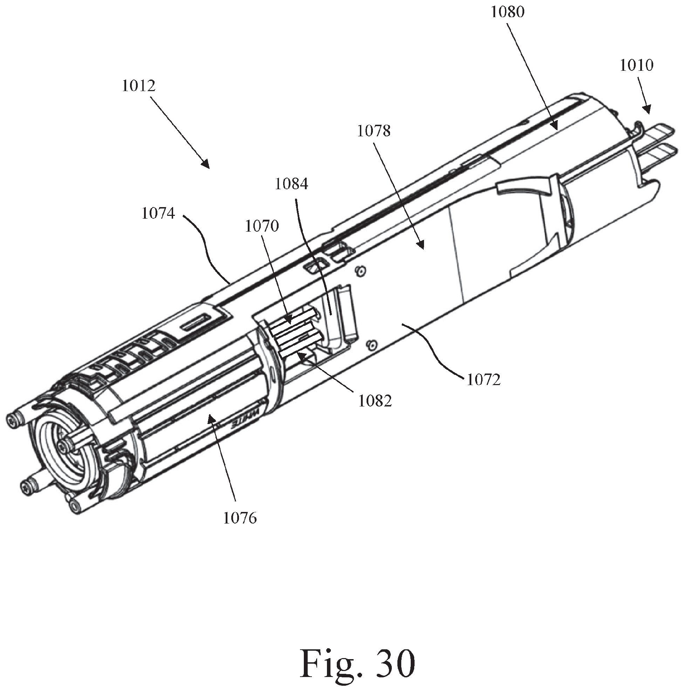

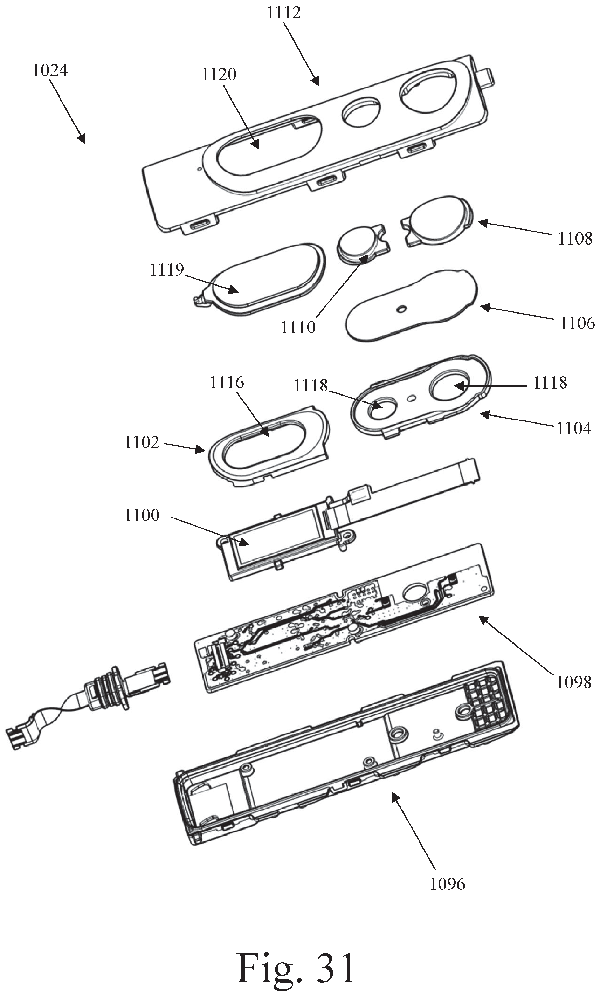

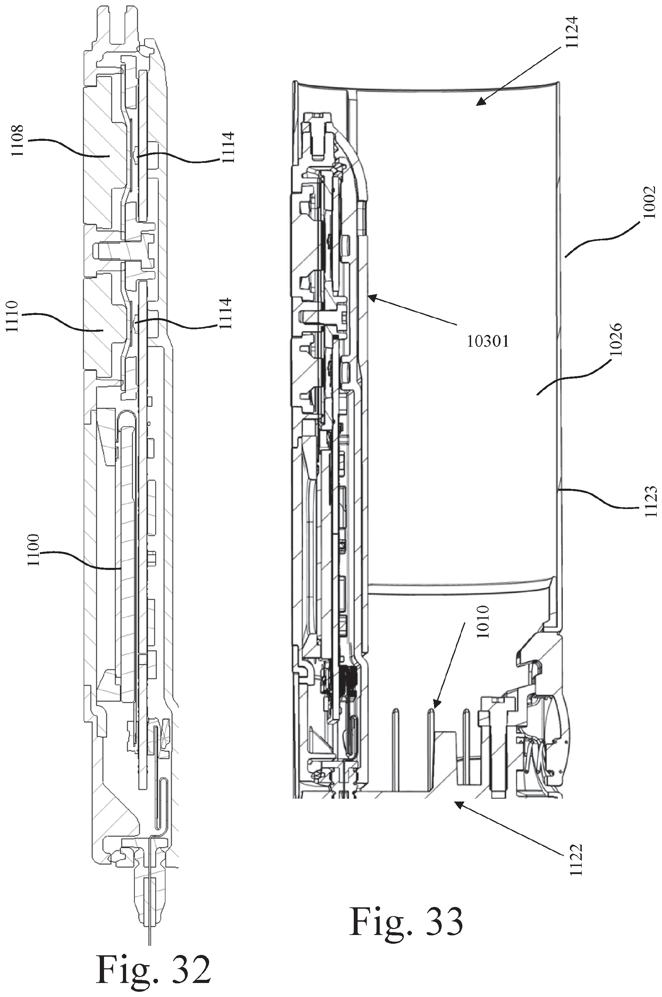

The core 300 is illustrated in Figures 16 to 33, and comprises a core body 302 and a valve assembly 304.

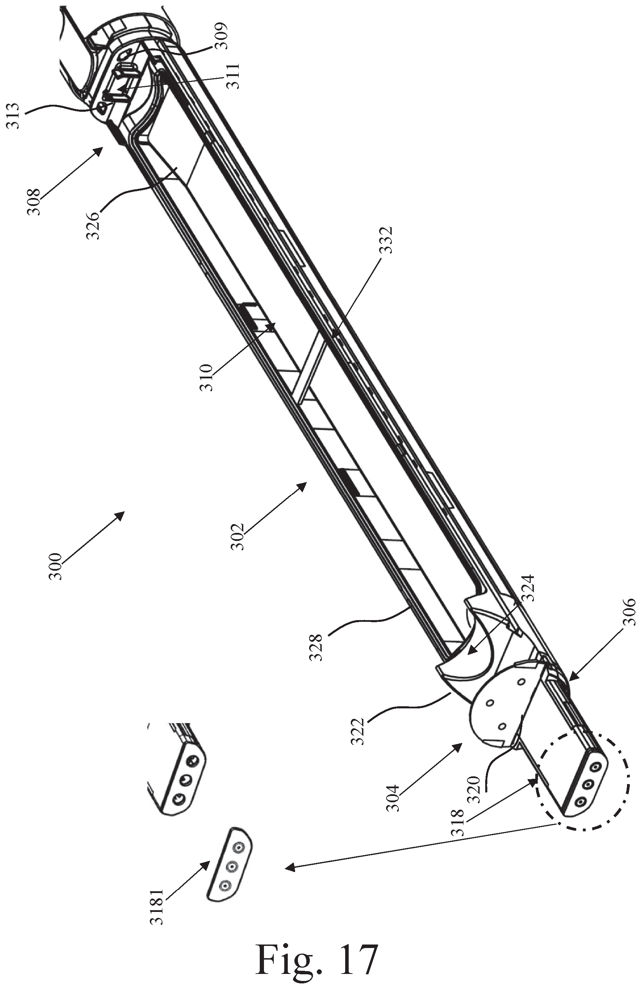

The core body 302 is elongate in form, and comprises a first end 306, a second end 308, an outlet channel 310, an auxiliary mesh 312 an outlet duct 314, a looming channel 316, and an electrical connection portion 318. The auxiliary mesh 312 can be considered to be a third separation mechanism. Figure 16 shows the core 300 with the auxiliary mesh 312 while figure 17 shows the core 300 without the auxiliary mesh 312.

The core body 302 has a maximal axial length between the valve assembly 304 and the second 308 ends, measured in a direction parallel to a central longitudinal axis C of the core body 302, of around 33cm. Such a length corresponds substantially to a length of the bin assembly 102. The core body 302 has a maximal width, measured in a first direction orthogonal to the central longitudinal axis C of the core body 302, of slightly less than 38mm. The core body 302 has a maximal height, measured in a second direction orthogonal to the central longitudinal axis C of the core body 302 and orthogonal to the first direction, of about 21mm. The dimensions of the core body 302 are such that the core body 302 can be selectively received within the bin assembly 102.

Located toward the first end 306 of the core body 302 are a valve mounting channel 320, and a ramp 322. The valve mounting channel 320 is shaped and dimensioned to receive a valve base 340 of the valve assembly 304. The valve mounting channel 320 extends across a full width of the core body 302, and is shaped to define one half of a dovetail joint. A lower surface of the valve mounting channel 320 comprises a locating recess 321 that is shaped and dimensioned to receive a corresponding location projection 350 of the valve base 340 of the valve assembly 304. The ramp 322 is upstanding relative to the valve mounting channel 320, and comprises a cut-out 324. The cut-out 324 is generally U-shaped in form, with a curvature of the cut-out 324 corresponding substantially to a curvature of the primary mesh 204 of the filter assembly 200. The ramp 322 is spaced apart from the valve mounting channel 320 in a direction measured parallel to the central longitudinal axis C of the core body 302. This distance provides a clearance for the valve assembly 304 to move between the open and close positions.

The second end 308 of the core body 302 comprises a planar wall 309 and a locating channel 311. The planar wall 309 is upstanding from a same side of the core body 302 as the ramp 322, and extends orthogonally to the central longitudinal axis C of the core body 302. The locating channel 311 is located on a side of the planar wall 309 that faces the ramp 322, and extends upwardly in a direction orthogonal to the central longitudinal axis C of the core body 302. The locating channel 311 is defined by two opposing walls 313, with free ends of the opposing walls 313 angled toward one another. The locating channel 311 is shaped and dimensioned to receive the locating projection 250 of the core connection portion 248 of the filter assembly 200.

The outlet channel 310 is formed in an upper surface of the core body 302, on a same side of the core body 302 as the ramp 322, and is located between the ramp 322 and the first end 306 of the core body 302. A lower surface of the outlet channel 310 that is proximal to the second end 308 of the core body 302 defines a ramped surface 326 toward the outlet duct 314. The outlet channel 310 is shaped and dimensioned to receive a portion of the lower tray 2042 and the filter media main body 230. The outlet channel 310 is positioned to underlie the primary mesh 202. The outlet channel 310 extends in a direction which is parallel to a direction in which the primary mesh 202 extends along the chamber 122. The direction in which the outlet channel 310 extends is also parallel with a direction of bulk airflow through the airflow inlet 140 into the separation system 100. Moreover, the direction in which the primary mesh 202 extends in the chamber 122 is parallel with a central handle axis of the outer sleeve 2018. In use, a minimum distance between the airflow inlet 140 and the primary mesh 202 measured in a direction parallel to the direction of bulk airflow through the airflow inlet 140, is around 5mm, and may, in some examples, be no more than 10mm.

An upper periphery 328 of the outlet channel 310 is shaped and dimensioned so as to contact the upper rim 242 of the lower tray 2042, such that the upper rim 242 of the lower tray 2042 can be supported on the upper periphery 328 of the outlet channel 310. Collectively, the lower tray 2042, the filter media main body 230, auxiliary mesh 312, and the outlet channel 310, act to partly define an airflow outlet 330 of the separation system 100.

Located outwardly of side edges of the upper periphery 328 of the outlet channel 310 are guide surfaces 332 that are shaped and dimensioned to slidably receive the guide rails 120 of the bin body 108 of the bin assembly 100 thereon.

The auxiliary mesh 312 acts to filter coarse debris from airflow in use, and hence may also be referred to as a filter, or indeed a fine filter. The auxiliary mesh 312 also acts to prevent any debris from falling from the separator cartridge 200 into the outlet channel 310 when the separator cartridge 200 is removed from the outlet channel 310, as will be discussed in more detail hereinafter.

The auxiliary mesh 312 is formed of metal such as aluminium, and comprises through-holes evenly distributed along the length of the auxiliary mesh 312. Each through-hole has chamfered edges. The auxiliary mesh 312 has an axial length corresponding to the cutout to accommodate the filter assembly 200 when measured in a direction parallel to the central longitudinal axis C of the core body 302. The auxiliary mesh 312 has a width, measured in a direction orthogonal to the central longitudinal axis C of the core body 302, that corresponding to the cutout to accommodate the filter assembly 200. The auxiliary mesh 312 is shaped and dimensioned to be received within the outlet channel 310, and such that the auxiliary mesh 312 can underlie the filter assembly 200. The auxiliary mesh 312 has a cross-sectional shape, when viewed along the direction in which the auxiliary mesh 312 extends, which is generally different to the cross-sectional shape of the primary mesh 202. For example, the auxiliary mesh 312 may have a substantially flat cross-sectional shape.

The auxiliary mesh 312 is mounted within the outlet channel 310. The auxiliary mesh 312 is positioned to underlie the primary mesh 202.

The outlet duct 314 is located at the second end 308 of the core body 302, and is in fluid communication with the outlet channel 310. The outlet duct 314 can therefore also be considered to form part of the airflow outlet 330 of the separation system 100. The outlet duct 314 has a greater maximal cross-sectional area, viewed in a plane orthogonal to the central longitudinal axis C, than a maximal cross sectional area defined between the lower tray 2042 and the base of the outlet channel 310. An end of the outlet duct 314 distal to the outlet channel 310 is open.

The looming channel 316 extends from the first end 306 to the second end 308 of the core body 302, and underlies the outlet channel 310 and the outlet duct 314. The looming channel 316 is a hollow chamber that accommodates electrical connections that run from the motor assembly 1000 and the battery assembly 2000, as will be discussed in more detail hereinafter.

The electrical connection portion 318 extends outwardly from the first end 306 of the core body 302, in a direction away from the valve assembly 304. The electrical connection portion 318 is raised relative to a lower wall of the core body 302 that defines an outer wall of the looming channel 316. The electrical connection portion 318 is shaped and dimensioned to be received within the bin assembly 102, and to releasably engage with a corresponding cleanerhead electrical connection portion 3036 of the cleanerhead 3000, as will be discussed in more detail hereinafter.

The electrical connection portion 318 houses three terminal connections 336, and a lower surface of the electrical connection portion 318, which underlies the valve mounting channel 320, defines an abutment surface 338 for selectively engaging the engagement end 158 of the bin interlock member 115. A silicone membrane 3181 is provided at one end of the electrical connection portion 318 facing the electrical connection portion 3036. The silicone membrane 3181 includes "o" or "+" cutaway for terminal insertion. This prevents dust from entering the electrical connection portion 318.

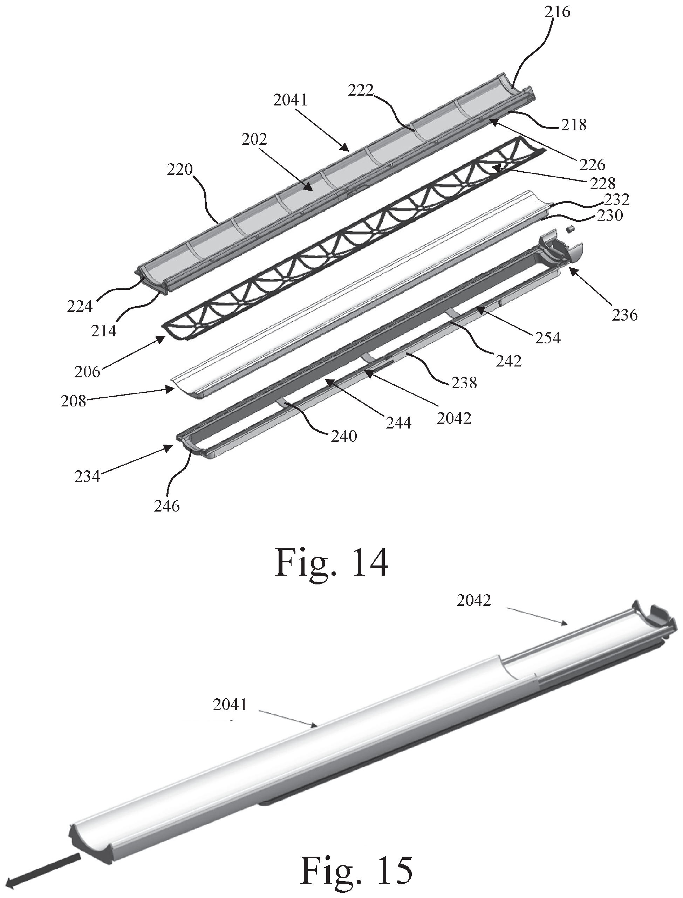

The valve assembly 304 is shown in Figures 14 to 16, and comprises a valve base 340, a flexible member 342, and a rigid member 344.

The valve base 340 is relatively rigid. The valve base 340 is elongate in form, and is shaped and dimensioned to be slidably received within the valve mounting channel 320. The valve base 340 has a cross-sectional T shaped structure to be formed with the valve mounting channel 320. The valve base 340 has a width measured in a direction orthogonal to the central longitudinal axis C of the core body 302, such that the valve base 340 extends across substantially all of a width of the core body 302 when located in the valve mounting channel 320.

The valve base 340 clamps the flexible member 342 and holds the flexible member 342 in an upright manner, collectively forming a T shaped valve assembly 304. Additional securing means are provided to secure the flexible member 342 to the valve base 340. At least two keying apertures are provided on the valve base and shaped and dimensioned to receive a pre-determined amount of flexible material forming the flexible member 342 as part of an overmoulding process, and act to secure the flexible member 342 to the valve base 340. The pre-determined amount of flexible material forming the flexible member 342 that extends through the keying apertures form the location projections 350. These location projections 350 extend away from the lower surface of the valve base 340, and is shaped and dimensioned to be received within the locating recess 321 of the valve mounting channel 320. A height of the location projection 350 is such that the location projection 350 can be removed from the locating recess 321 upon application of sufficient force to the valve assembly 304 in a direction along the valve base 340, without causing damage to the location projection 350. The location projection 350 is located substantially centrally along the valve base 340.

The flexible member 342 is formed of silicone. The flexible member 342 is overmoulded onto the valve base 340, and has a generally semi-circular cross-sectional shape.

The rigid member 344 comprises a main body 356, and first 358 and second 360 contact portions. The main body 356 is generally semi-circular in cross-sectional shape, whilst the first 358 and second 360 are generally square or rectangular in cross-sectional shape. The first 358 and second 360 contact portions extend generally radially outwardly from the main body 356 in region of a linear portion of the main body 356 and extend beyond the flexible member 342 clamping the edge of the flexible member 342. The upstream face of the main body 356 comprises three moulding protrusions 362 that extend through openings of the flexible member 324.

The rigid member 344 is embedded within the flexible member 342 as part of an overmoulding process of forming the flexible member 342. The rigid member 344 is only partly embedded within the flexible member 342, such that a downstream face of the rigid member 344 is exposed. The flexible member 342 extends about substantially an entirety of a periphery of the main body 356 of the rigid member 344 to define a sealing lip 364.

Collectively, the flexible member 342 and the rigid member 346 define a valve member 366 of the valve assembly 304, with the valve member 366 having an upstream face 368 and a downstream face 370. The upstream face 368 is defined by the flexible member 342, the first 358 and second 360 contact portions of the rigid member 344, and the moulding protrusions 362 of the rigid member 344. The downstream face 370 is defined by the sealing lip 364 of the flexible member 342, main body 356 of the rigid member 344, the first 358 and second 360 contact portions of the rigid member 344.

The rigid member 344 is embedded within the flexible member 342 such that flexible material of the flexible member 342 is located between the valve base 340 and the rigid member 344, with such flexible material having a pre-determined height between the valve base 340 and the rigid member 344. This portion of flexible material effectively defines a living hinge 372 that enables the flexible member 342, and hence the valve member 366, to move relative to the valve base 340. The valve base 340 effectively defines a hinge axis about which the valve member 366 can rotate.

The receiving channel 354 extends linearly across the upper surface 352 of the valve base 340, and receives a pre-determined amount of flexible material forming the flexible member 342 as part of an overmoulding process. A height of the receiving channel 354 is chosen to allow for a pre-determined amount of movement of the flexible member 342, as will be discussed in more detail hereinafter. The receiving channel 354 is offset from a centre of the valve base 340, with the receiving channel 354 positioned closer to an upstream end of the valve assembly 304 than a downstream end of the valve assembly 304. It will be appreciated that the terms upstream and downstream as used herein are provided in relation to an airflow through the vacuum cleaner 10 in use.

In view of the offset nature of the receiving channel 354 that extends linearly across the upper surface 352 of the valve base 340, and the height of the flexible material that defines the living hinge 372, the valve member 366 can rotate asymmetrically about the valve base to differing extents. The valve member 366 can rotate in a downstream direction such that the downstream face 370 defines a minimum angle of around 40° with an axis parallel to the central longitudinal axis C of the core body 302. While figure 17 shows the minimum angle of around 40°, one skilled in the art will recognise that other angles may be implemented without departing from the art. The valve member 366 can rotate in an upstream direction such that the upstream face 368 is located substantially parallel with the central longitudinal axis C of the core body 302. Further operation of the valve assembly 304 will be discussed in more detail hereinafter.

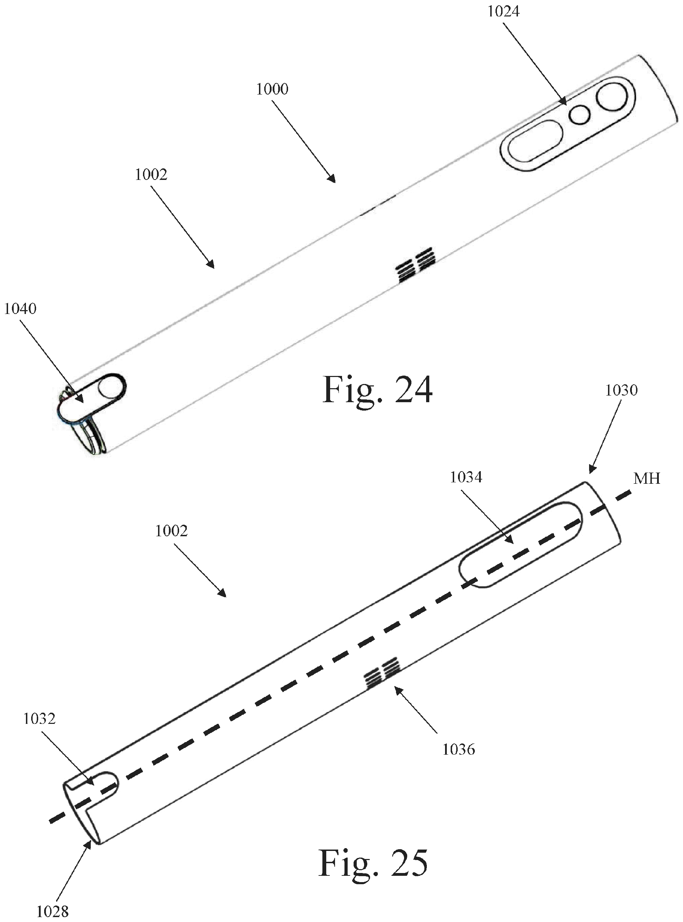

The motor assembly 1000 is illustrated in Figures 24 to 33, and comprises a motor housing 1002, a suction motor 1004, a motor mount 1006, a motor control circuit board 1008, a power terminal 1010, an electronics chassis 1012, first 1014 and second 1016 thermal shields, first 1018 and second 1020 acoustic foam inserts, a user interface assembly 1024, and a housing insert 1026.

The motor housing 1002 is generally elongate, cylindrical, and hollow in form, and comprises a first end 1028, a second end 1030, a bin catch receiving aperture 1032, a user interface aperture 1034, first 1036 and second 1038 airflow outlets, and a battery catch receiving aperture 1039.

The motor housing 1002 has a diameter of around 38mm, although diameters in the range of 35mm to 50mm are also envisaged. The housing has a thickness, measured in a radial direction relative to a longitudinal motor housing axis MH, of around 0.7mm, and is formed of cold-rolled aluminium.

The bin catch receiving aperture 1032 is formed in a periphery of the first end 1028 of the motor housing 1002, and is shaped and dimensioned to receive a portion of the bin catch 1040. The bin catch 1040 is resiliently pivotally mounted to the first end 1028 of the motor housing 1002, and is shaped and dimensioned to selectively engage with the latching member 148 of the bin catch receiving portion 144 of the bin body 108.

The user interface aperture 1034 is formed toward the second end 1030 of the motor housing 1002, and is shaped and dimensioned such that an LCD screen 1100, a power button 1108, and a mode button 1110 of the user interface assembly 1024 are visible through the user interface aperture 1034. The user interface aperture 1034 is located on a same side of the motor housing 1002 as the bin catch receiving aperture 1032.

The first 1036 and second 1038 airflow outlets are disposed diametrically opposite to one another on the cylindrical surface of the motor housing 1002, such that corresponding points of the first 1036 and second 1038 airflow outlets are located around 180 degrees away from one another about a circumference of the motor housing 1002. Central regions of the first 1036 and second 1038 airflow outlets are each disposed around 90 degrees about the circumference of the motor housing 1002 relative to each of the bin catch receiving aperture and the user interface aperture 1034. The first 1036 and second 1038 airflow outlets are disposed around halfway along an axial length of the motor housing 1002, measured in a direction parallel to the longitudinal motor housing axis MH.

The first 1036 and second 1038 airflow outlets are each formed by a series of slots formed in the motor housing 1002.

The battery catch receiving aperture 1039 is located toward the second end 1030 of the motor housing 1002, and is located at an opposite side of the motor housing 1002 to the user interface aperture 1034. The battery catch receiving aperture 1039 is located along the motor housing 1002 such that it is generally between the user interface aperture 1034 and the first 1036 and second 1038 airflow outlets in a direction parallel to the longitudinal motor housing axis MH. The battery catch receiving aperture 1039 is shaped and dimensioned to receive the battery catch mechanism 1022.

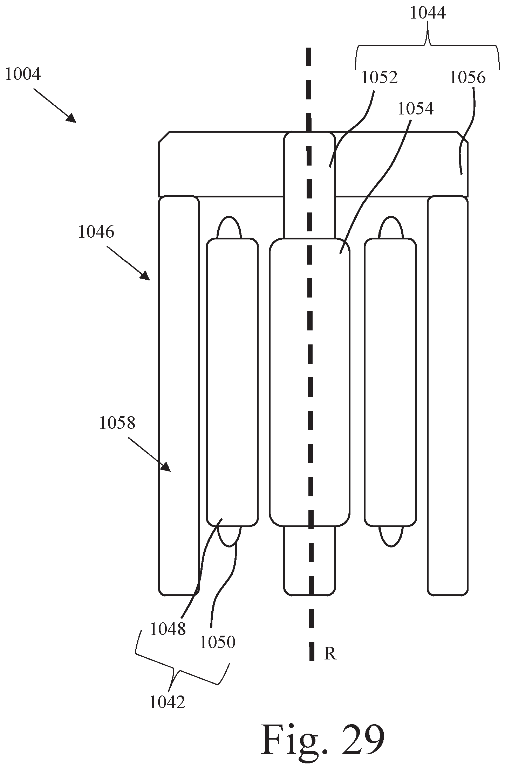

The suction motor 1004 is illustrated schematically in Figure 29, and comprises a stator assembly 1042, a rotor assembly 1044, and a housing assembly 1046.

The stator assembly 1042 comprises a stator core 1048, and a winding 1050 wound about the stator core 1048. It will be appreciated that a number of different stator assembly arrangements are envisaged. The rotor assembly 1044 comprises a shaft 1052, a permanent magnet 1054 mounted to the shaft 1044, and an impeller 1056 mounted to the shaft 1052. The shaft 1052 defines a rotational axis R of the suction motor 1004. The impeller 1056 is mounted to the shaft 1052 downstream of the permanent magnet 1054, such that the suction motor 1004 is an outlet-cooled motor. The impeller 1056 is a mixed-flow impeller.

The housing assembly 1046 defines a casing for the suction motor 1004, and houses the stator assembly 1042 and the rotor assembly 1044. The housing assembly 1046 defines a diffuser stage 1058 located upstream of the impeller 1056, with the diffuser stage 1058 acting as an axial diffuser.

The motor mount 1006 is generally cylindrical and hollow in form. The motor mount 1006 thus acts as a soft-mount for the suction motor 1004. The motor mount 1006 comprises first 1060 and second 1062 sealing lips, and a number of mounting pips 1064. The first 1060 and second 1062 sealing lips are each located about a respective periphery of a free end of the motor mount 1006, and are upstanding from an outer surface of the motor mount 1006. The mounting pips 1064 are arranged in a number of rows of three mounting pips 134, with each row extending between the first 1060 and second 1062 sealing lips in a direction parallel to the rotational axis R of the suction motor 1004. The rows of three mounting pips 134 are arranged closer to the first sealing lip 1060 due to placement of the stator assembly 1042 within the housing. Essentially, the rows of three mounting pips 134 are arranged to surround the stator assembly 1042. An inner diameter of the motor mount 1006 is designed such that the motor mount 1006 can fit snugly about the housing assembly 1046 of the suction motor 1004.

The motor control circuit board 1008 comprises a first portion 1066 to which control circuitry is mounted, and a second portion 1068 to which the power terminal 1010 is mounted. The control circuitry can include an inverter and one or more processors of the suction motor 1004. The first portion 1066 is generally planar in form, and is positioned such that an extension line of the rotational axis R of the suction motor 1004 extends in plane defined by the motor control circuit board 1008. The first portion 1066 has a generally rectangular cross-sectional shape, with a minor dimension of the first portion being less than 38mm. In some examples, the minor dimension of the first portion 1066 corresponds substantially to an outer diameter of the suction motor 1004. The second portion 1068 is generally planar in form, and is positioned such that the second portion 1068 is substantially orthogonal to the first portion 1066. The first portion 1066 is electrically connected to the suction motor 1004 by flexible cables 1070 of the harness assembly 1013. The motor control circuit board 1008 is hard mounted within the electronics chassis 1012. The power terminal 1010 defines an electrical connection for receiving power from the battery assembly 2000.

The electronics chassis 1012 comprises a first part 1072 and a second part 1074 that collectively define a motor receiving portion 1076, a printed circuit board (PCB) receiving portion 1078, and an electrical connection housing 1080. The motor receiving portion 1076 is generally cylindrical and hollow in form, having opposing open ends. The motor receiving portion 1076 is shaped and dimensioned to receive the suction motor 1004 and the motor mount 1006.

The PCB receiving portion 1078 is located between the motor receiving portion 1076 and the electrical connection housing 1080. The PCB receiving portion 1078 comprises a casing that is shaped and dimensioned to receive the first portion 1066 of the motor control circuit board 1006. The PCB receiving portion 1078 comprises a cut-out 1082 that enables the flexible cables 1070 to extend between the motor receiving portion 1076 and the PCB receiving portion 1080, and hence to extend between the suction motor 1004 and the motor control circuit board 1008. A periphery of the cut-out 1082 comprises a grommet 1084 through which the flexible cables 1070 extend. The PCB receiving portion 1078 is fluidically isolated from the motor receiving portion 1076. This can enable there to be no airflow filters between the suction motor 1004 and the motor control circuit board 1008. The PCB receiving portion 1078 has a reduced width, measured in a direction orthogonal to the rotational axis R of the suction motor 1004, relative to the motor receiving portion 1076 and the electrical connection housing 1080. This arrangement of the PCB receiving portion 1078 helps to divide the airflow from the suction motor 1004 into 2 paths exiting out of respective first 1036 and second 1038 airflow outlets. Thus forming a Y shaped airflow between the inlet of the suction motor 1004 and first 1036 and second 1038 airflow outlets.

The electrical connection housing 1080 is generally cylindrical in form, and is located adjacent to the PCB receiving portion 1078 at an opposite end of the electronics chassis 1012 to the motor receiving portion 1076. A transition between the PCB receiving portion 1078 and the electrical connection housing 1080 is smooth, with the electrical connection housing 1080 shaped and dimensioned to correspond substantially to an interior dimension of the motor housing 1002. The electrical connection housing 1080 is shaped and dimensioned to receive the second portion 1068 of the motor control circuit board 1008, the power terminal 1010, and a communications connection 1086 of the harness assembly 1013.

Harness assembly comprises flexible cables 1070 and a communications connection. Some of the flexible cables 1070 extend through the motor housing 1002 and through the looming channel 316, and are in electrical connection with the electrical connection portion 318 of the core 300. In some examples, the flexible cables 1070 comprise a charging cable for transmitting electrical power from the cleanerhead to the battery assembly 2000, as will be discussed in more detail hereinafter. Some of the flexible cables 1070 are electrically connected to the suction motor 1004. The communications connection comprises pins for releasably connecting to the battery assembly 2000, and is also connected to the motor control circuit board 1008.

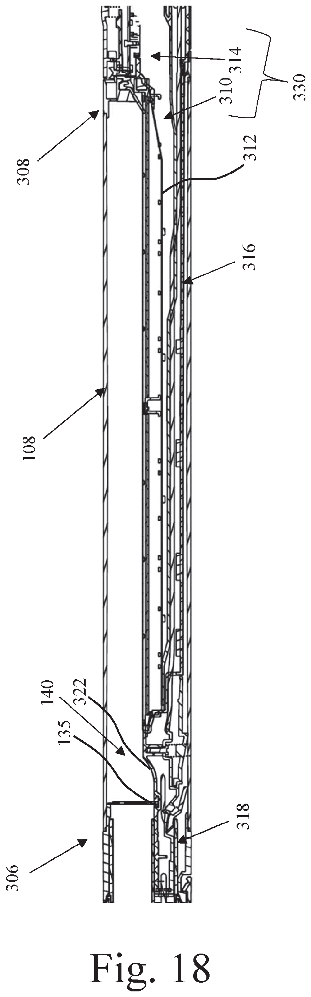

The first 1014 and second 1016 thermal shields are substantially similar in form, and are formed of metal or any materials for guiding the airflow from the suction motor 1004 out of the first 1036 and second 1038 airflow outlets. The first 1014 and second 1016 thermal shields are shaped and dimensioned to overlie side regions of the PCB receiving portion 1078 of the electronics chassis 1012, and act as heat sinks. The first 1014 and second 1016 thermal shields receive the first 1018 and second 1020 acoustic foam inserts. Each of the first 1014 and second 1016 thermal shields comprises a cutout 10141 and 10161. For brevity, figure 18 shows only one side of a pair of thermal shields, a pair of acoustic foam inserts and a first part of the electronics chassis 1012.

The battery catch mechanism 1022 comprises a catch insert 1090 and a catch member 1092. The catch insert 1090 is located within the motor housing 1002 in the region of the battery catch receiving aperture 1039, and the catch member 1092 is resiliently mounted to the catch insert 1090. The catch member 1092 comprises a hook 1094 shaped and dimensioned to releasably engage with a locating recess 2048 of the battery assembly 2000, as will be discussed in more detail hereinafter.

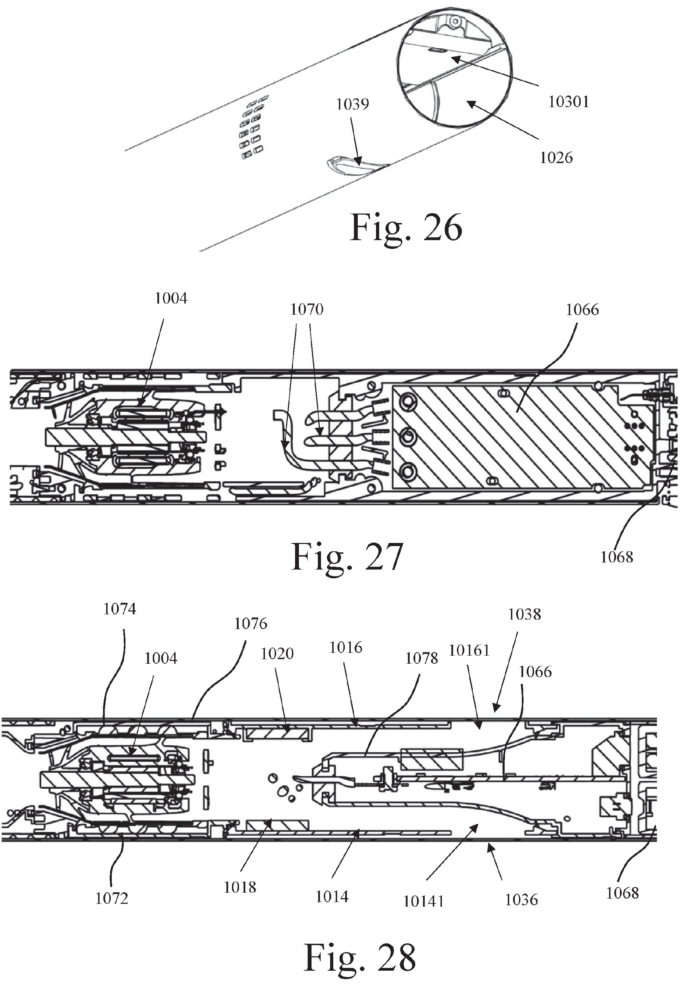

The user interface assembly 1024 is shown in isolation in Figure 26, and comprises an interface base 1096, an interface PCB 1098, an LCD screen 1100, a screen bracket 1102, a button bracket 1104, a button seal 1106, a power button 1108, a mode button 1110, and a window portion 1112.

The interface base 1096 is shaped and dimensioned to receive the interface PCB 1098, and is shaped and dimensioned to sit on top of a planar portion 10301 of the housing insert 1026. The interface PCB 1098 comprises microswitches 1114 corresponding to the power button 1108 and the mode button 1110, and the LCD screen 1100 is mounted to the interface PCB 1098. The screen bracket 1102 is shaped and dimensioned to overlie the LCD screen 1100, and comprises a through-hole 1116 through which the LCD screen 1100 is visible.

The button bracket 1104 is shaped and dimensioned to underlie the power button 1108 and the mode button 1110, and comprises through-holes 1118 that enable the power button 1108 and the mode button 1110 to selectively contact the respective microswitches 1114, via the button seal 1106. The button seal 1106 is formed of silicone, and is shaped and dimensioned to sit within the button bracket 1104, between the button bracket 1104 and the power button 1108 and the mode button 1110. A Polyethylene terephthalate (PET) sheet is provided between the button seal 1106 and the microswitches 1114 to protect the button seal 1106 from being punctured by the microswitches 1114. The PET sheet has a thickness of about 0.10mm.

The window portion 1112 is shaped and dimensioned to overlie the interface base 1096, such that the interface PCB 1098, the LCD screen 1100, the screen bracket 1102, the button bracket 1104, the button seal 1106, the power button 1108, and the mode button 1110, are located between the interface base 1096 and the window portion 1112. The window portion 1112 comprises apertures 1120 through which the LCD screen 1100, the power button 1108, and the mode button 1110 are visible and accessible to a user. A screen protector 1119 is provided between the window portion 1112 and the screen bracket 1102 to protect the LCD screen 1100.

The housing insert 1026 is generally elongate and hollow in form, and is shaped and dimensioned to be received within the second end 1030 of the motor housing 1002.

The housing insert 1026 has a first end 1122 and a second end 1124. The housing insert 1026 has an axial length of around 10cm between the first 1122 and second 1124 ends, measured in a direction parallel to the motor housing axis MH. Such a length corresponds roughly to a little more than a length of a single battery cell 2002 of the battery assembly 2000, as will be discussed in more detail hereinafter. The first end 1122 is open such that the power terminal 1010 and the communications connection can extend into the first end 1122. An internal surface 1123 of the first end 1122 is shaped and dimensioned to correspond to an interface portion 2046 of the battery assembly 2000, as will be discussed in more detail hereinafter, with an upper internal surface of the first end 1122 being substantially planar 10301 in form. The second end 1124 is open, and is shaped and dimensioned to receive a first sleeve portion 2042 of the battery assembly 2000. In one example, the housing insert 1026 may receive one-quarter or less of the length of the battery assembly 2000.

An upper outer surface 1126 of the housing insert 1026, between the first 1122 and second 1124 ends, is generally planar in form, and is shaped and dimensioned to receive the interface base 1096 of the user interface assembly 1024. This arrangement inhibits the battery assembly 2000 from moving rotationally with respect to the motor housing 1002. This may be referred to as an anti-rotation mechanism.

The battery assembly 2000 is illustrated in Figures 28 to 32, and comprises four battery cells 2002, first 2004 and second 2006 cell cradles, a cell chassis 2008, power terminals 2010, communications terminals 2012, a battery management system, an inner sleeve 2016 and an outer sleeve 2018. Collectively the inner sleeve 2016 and the outer sleeve 2018 define a battery housing of the battery assembly 2000. The inner sleeve 2016 and the outer sleeve 2018 can be formed of a plastic material.

Each of the battery cells 2002 is a cylindrical lithium ion battery cell. The outer diameter and axial length of each battery cell 2002 is left as a design choice and depend on the dimension of the battery housing, the available space within the battery housing and the battery capacity required to work the vacuum cleaner. Each of the battery cells 2002 can be considered to be a rechargeable battery cell, and the combination of the battery cells 2002 can be considered to be a rechargeable battery.

The first 2004 and second 2006 cell cradles each have substantially the same form, and comprise an upper cradle portion 2020 and a lower cradle portion 2022. The upper 2020 and lower 2022 cradle portions are each shaped to correspond to one of a respective upper half and lower half of a pair of the battery cells 2002 arranged linearly in a row. The battery cells 2002 are located in the first 2004 and second 2006 cell cradles, with tabs connecting together terminals of adjacent cells. When arranged within the first 2004 and second 2006 cell cradles, the battery cells 2002 extend in a row along an axis parallel to the longitudinal battery housing axis BH.

The cell chassis 2008 is generally elongate in form, and comprises a first end 2024, a second end 2026, and a planar wall 2030. The first end 2024 of the cell chassis 2008 comprises receiving apertures 2032 for receiving respective ones of the power terminals 2010 and the communications terminals. The first 2024 and second 2026 ends of the cell chassis have generally semi-circular cross-sectional shapes when viewed in a direction parallel to the longitudinal battery housing axis BH.

The planar wall 2030 extends from the second end 2026 toward the first end 2024, but stops short of the first end 2024. The planar wall 2030 corresponds to part of a linear periphery of the second end 2026. The planar wall 2030 is shaped and dimensioned to underlie around half of a battery circuit board 2036 of the battery management system 2014.

Collectively, the first end 2024, the second end 2026, the curved wall 2028, and the planar wall 2030, define a partially open chamber 2034. The partially open chamber 2034 is shaped and dimensioned to receive the first 2004 and second 2006 cell cradles, and hence to receive the four battery cells 2002.

The power terminals 2010 are located in the first end 2024 of the cell chassis 2008, and are in electrical communication with the battery cells 2002. The power terminals 2010 are shaped and dimensioned to releasably engage with the power terminal 1010 of the motor assembly 1000, so as to selectively define an electrical connection between the battery assembly 2000 and the motor assembly 1000.

The communications terminals 2012 are located in the first end 2024 of the cell chassis 2008, and are communicatively coupled to the battery management system. The communications terminals 2012 are shaped and dimensioned to releasably engage with the communications connection 1086 of the harness assembly.

The battery management system comprises a battery circuit board 2036 and a connecting tab. The battery circuit board 2036 is generally planar in form, with an axial length extending in a direction parallel to the longitudinal battery housing axis BH. The battery circuit board 2036 extends only partly along a length of the planar wall 2030, and is positioned such that the battery circuit board 2036 overlies three battery cells 2002, but does not overlie one battery cell 2002. This means that the battery housing overlaps with the motor housing in the direction of the central longitudinal access, and wherein the amount of overlap is about one quarter of the length of the battery housing in the direction of the central longitudinal axis CL. Control circuitry of the battery management system is mounted to the battery circuit board 2036. The connecting tab extends between the battery circuit board 2036 and the communications terminals 2012.

Collectively, the battery cells 2002, the first 2004 and second 2006 cell cradles, the cell chassis 2008, the power terminals 2010, the communications terminals 2012, and the battery management system 2014, define a battery sub-assembly.

The battery assembly 2000 further comprises a shock absorber arranged between the battery assembly 2000 and the motor housing. The shock absorber comprises a plunger 2011 and a spring 2013 to absorb shock received along the axial axis.

The inner sleeve 2016 comprises a first sleeve portion 2042 and a second sleeve portion 2044. The first sleeve portion 2042 is hollow in form, and is shaped and dimensioned to receive a portion of the battery sub-assembly corresponding to the first end 2024 of the cell chassis. The portion of the battery sub-assembly 2040 received within the first sleeve portion 2042 is a portion corresponding to a first battery cell 2002 in the row of battery cells, and is a portion corresponding to a region of the battery sub-assembly in which the battery circuit board 2036 is not located.

The first sleeve portion 2042 comprises an interface portion 2046, a locating recess 2048, and electrical connection openings 2050. The interface portion 2046 is generally planar in form, and is shaped and dimensioned to underlie the planar internal surface 1123 of the housing insert 1024. The locating recess 2048 is located on an opposite side of the first sleeve portion 2042 to the interface portion 2046, and is shaped and dimensioned to releasably engage with the hook 1094 of the battery catch mechanism 1022, to retain the battery assembly 2000 relative to the motor assembly 1000. The electrical connection openings 2050 are positioned on an end of the first sleeve portion 2042 that is distal from the second sleeve portion 2044, and are shaped and dimensioned to allow access to corresponding ones of the power terminals 2010 and the communications terminals 2012.

The second sleeve portion 2044 is generally cylindrical and hollow in form. The second sleeve portion 2044 is shaped and dimensioned to be received within the outer sleeve 2018. An end of the second sleeve portion 2044 distal from the first sleeve portion 2042 is open, such that the battery sub-assembly 2040 can be inserted into the inner sleeve 2016.

The outer sleeve 2018 is generally cylindrical and hollow in form, having a first end 2052 and a second end 2054. The outer sleeve 2018 has an axial length of around 24cm between the first end 2052 and the second end 2056, measured in a direction parallel to the longitudinal battery housing axis BH. The outer sleeve 2018 has an outer diameter of around 38mm. Outer diameters in the region of 35mm to 50mm are also envisaged. The outer sleeve 2018 is formed of metal, plastic or other materials, and has an interior volume sufficient to receive the second sleeve portion 2044 of the inner sleeve 2016 and a portion of the battery sub-assembly. The outer sleeve 2018 acts as a handle of the vacuum cleaner 10 in use. The outer sleeve 2018 may be at least partially covered in non-slip material, to inhibit the main unit 12 from slipping relative to a surface, such as a wall, that it may be positioned against. Alternatively, a non-slip material may be provided around the second end 2054 of the outer sleeve 2018.

The first end 2052 of the outer sleeve 2018 is open, and defines an aperture for receiving the second sleeve portion 2044 of the inner sleeve 2016 and a portion of the battery sub-assembly. The second end 2054 of the outer sleeve 2018 is closed, and generally hemi-spherical in form. A user indicator 2060 is provided exposed through an opening 2051 located closer to the first end 2052 of the outer sleeve 2018, with the user indicator 2060 taking the form of a light source that can be illuminated to display to a user a status of the battery cells 2002.

The outer sleeve 2018 is fixed to the inner sleeve 2016 by a screw or other appropriate fastener. When assembled, the inner sleeve 2016 and the outer sleeve 2018 give the battery assembly 2000 an axial length of about 34cm measured in a direction parallel to the longitudinal battery housing axis BH. When the battery assembly 2000 is assembled with the motor assembly 1000, the exposed part of the battery assembly 2000 has an axial length of 24cm measured in a direction parallel to the longitudinal battery housing axis BH. This means that the insert 1026 has a length of about 10cm measured in a direction parallel to the longitudinal battery housing axis BH to receive the inner sleeve 2016.

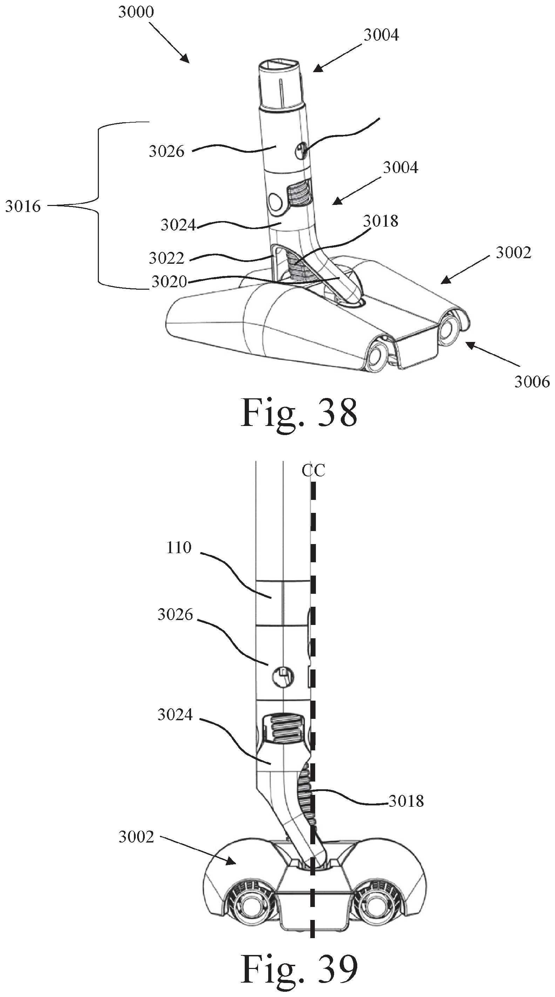

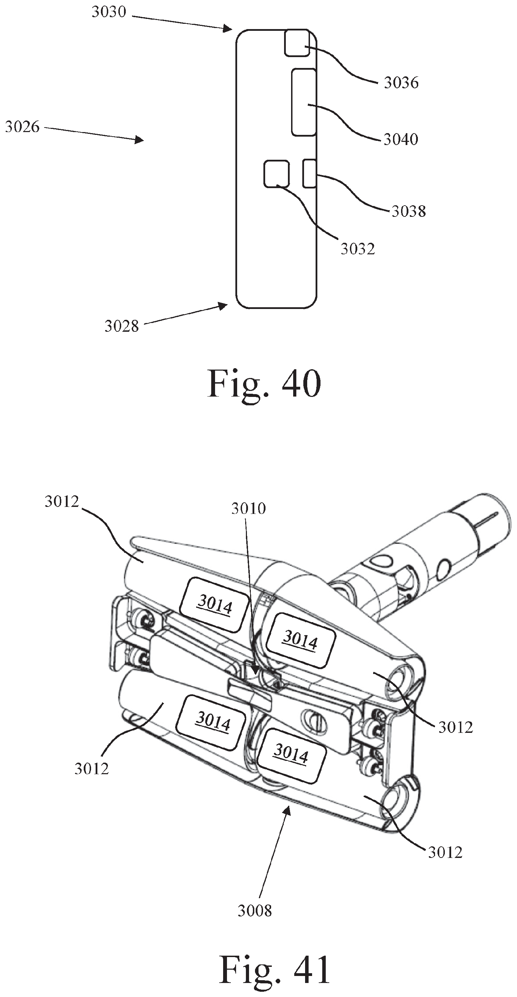

The cleanerhead 3000 is illustrated schematically in Figures 38 to 41. The cleanerhead 3000 comprises a main cleanerhead housing 3002, and a neck portion 3004.

The main cleanerhead housing 3002 is generally hollow and comprises an internal chamber 3006. A base 3008 of the main cleanerhead housing 3002 comprises an airflow inlet 3010. Four brushbars 3012 and four corresponding drive motors are located within the chamber 3006, with the drive motors each configured to drive rotation of the corresponding brushbar 3012 within the internal chamber 3006. Each brushbar 3012 is generally frustoconical in form, and comprises a nylon outer surface. The brushbars 3012 are arranged in two pairs.

The neck portion 3004 comprises a rigid body 3016 and a flexible duct 3018. The rigid body 3016 comprises first 3020 and second 3022 connecting arms, a first tubular body 3024, and a second tubular body 3026. The first 3020 and second 3022 connecting arms are each pivotally mounted to the main cleanerhead housing 3002, and fixedly mounted to the first tubular body 3024. The first 3020 and second 3022 cleanerhead arms are each pivotally mounted to the main cleanerhead housing 3002 at respective locations that are around halfway across a depth of the cleanerhead 3000, measured in a direction orthogonal to the central cleanerhead axis CC. The first 3020 and second 3022 cleanerhead arms can rotate relative to the main cleanerhead housing about a first cleanerhead rotational axis orthogonal to the central cleanerhead axis CC. In some examples, a biasing mechanism is provided that biases the neck portion 3004 of the cleanerhead 3000 to a position where a central axis of the neck portion is parallel to the central cleanerhead axis CC. This means that the central axis of the separation system is aligned with the central axis of the neck 3004 of the cleanerhead 3000.

The first tubular body 3024 is substantially hollow in form, and is upstanding from the first 3020 and second 3022 connecting arms. The first tubular body 3024 is shaped and dimensioned to receive a portion of the flexible duct 3018.

The second tubular body 3026 comprises a fixed end 3028, a free end 3030, first and second charging contacts 3032, a cleanerhead electrical connection portion 3036, a locating magnetic portion 3038, and a cleanerhead catch 3040.

The fixed end 3028 is pivotally mounted to the first tubular body 3026 such that the second tubular body 3026 can rotate relative to the first tubular body 3024 about a second cleanerhead rotational axis orthogonal to both the first cleanerhead rotational axis, and the central cleanerhead axis CC. The fixed end 3028 is shaped and dimensioned to receive a portion of the flexible duct 3018. The flexible duct 3018 terminates within the fixed end 3028 and is in fluid communication with the free end 3030 of the second tubular body 3026.

The free end 3030 is shaped and dimensioned to be received within the first connecting cuff 110 of the bin assembly 102, and is also shaped and dimensioned to selectively engage with the engagement end 158 of the bin interlock member 115.

The first and second charging contacts 3032 are each located on an outer surface of the second tubular body 3026, and are disposed generally diametrically opposite one another. The first and second charging contacts 3032 are each disposed around 90 degrees from the cleanerhead catch 3040 about a periphery of the second tubular body 3026. The first and second charging contacts 3032 are, when the second tubular body 3026 extends in a direction substantially parallel with the central cleanerhead axis CC, and when the cleanerhead 3000 is located on a horizontal surface HS to be cleaned, located at a certain height from the horizontal surface HS to be cleaned such that the first and second charging contacts 3032 are each in electrical communication with the cleanerhead electrical connection portion 3036. The first and second charging contacts 3032 may also be referred to as charging connectors, and in some examples can comprise spring loaded contact pins.

The cleanerhead electrical connection portion 3036 is shaped and dimensioned to engage with, and form an electrical connection with, the electrical connection portion 318 of the core body 302. The cleanerhead electrical connection portion 3036 is in electrical communication with the first and second charging contacts 3032, and with control circuitry of the drive motors 3014.

The locating magnetic portion 3038 is embedded within a wall of the second tubular body 3026, and is located around 90 degrees about a periphery of the second tubular body 3026 from each of the first and second charging contacts 3032. The locating magnetic portion 3038 is located on a same side of the second tubular body 3026 as the cleanerhead catch 3040, with the cleanerhead catch 3040 being located closer to the free end 3030 than the locating magnetic portion 3038. In some examples, more than one locating magnetic portion is provided. The locating magnetic portion can comprise a permanent magnet, or a ferromagnetic material.

The cleanerhead catch 3040 comprises a resiliently biased hook for selectively engaging with the engagement lip 142 of the planar portion 126 of the first connecting cuff, to selectively retain the cleanerhead 3000 relative to the bin assembly 102.

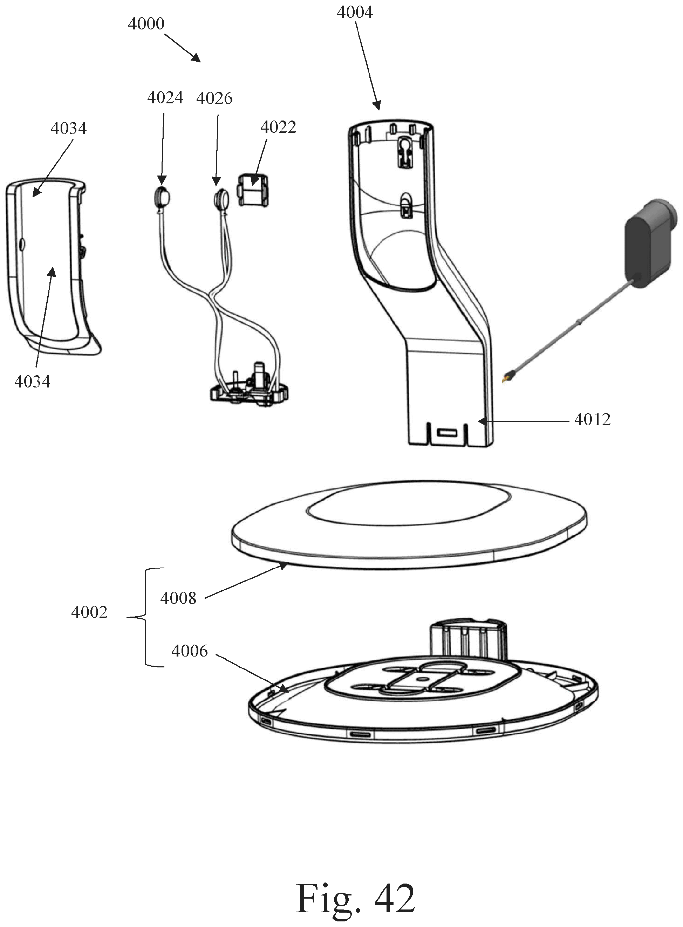

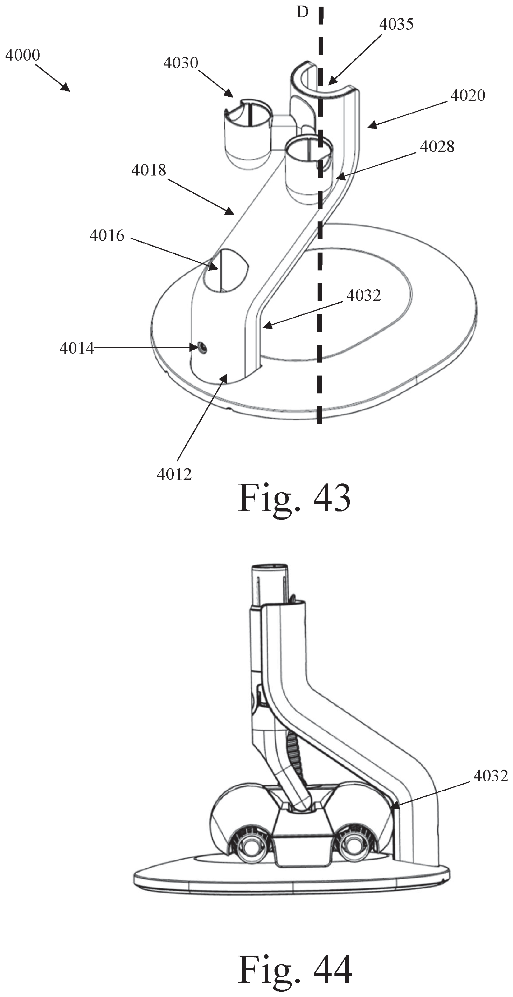

A dock 4000 for the vacuum cleaner 10 is illustrated in Figures 42 to 44.

The dock 4000 comprises a base 4002, and a retention arm 4004.

The base 4002 comprises a lower base body 4006 and an upper base body 4008. The lower base body 4006 has a generally oval cross-sectional shape, with a lower surface of the lower base body 4006 comprising a non-slip material to inhibit sliding of the lower base body 4006 relative to a surface on which the lower base body 4006 is located in use. The upper base body 4008 is mounted to the lower base body 4006 by complementary coupling means or screws. The upper base body 4008 has dimensions greater than or equal to a maximal dimensions of the cleanerhead 3000.

The upper base body 4008 has a generally oval cross-sectional shape, with an upper surface of the upper base body 4008 comprising an arm receiving aperture that is shaped and dimensioned to receive a first arm portion 4012 of the retention arm 4004. The arm receiving aperture is located away from a center of the upper base body 4008, and towards a region of the upper based body 4008 having a minimal width.

The retention arm 4004 comprises a first arm portion 4012, a charging port 4014, a battery receiving aperture 4016, a second arm portion 4018, a third arm portion 4020, a locating magnet 4022, first 4024 and second 4026 sprung charging contacts, and first 4028 and second 4030 tool storages.

The first arm portion 4012 is received within the arm receiving aperture of the upper base body 4008, and is upstanding from the upper base body 4008 in a direction substantially orthogonal to the upper base body 4008. The first arm portion 4012 defines a cleanerhead abutment surface 4032 that faces inwardly toward a central region of the upper base body 4008, and that is shaped and dimensioned to abut part of the cleanerhead 3000 when the cleanerhead 3000 is held in position on the dock 4000.

The charging port 4014 is located on a region of the first arm portion 4012 that faces outwardly toward a periphery of the upper base body 4008. The charging port 4014 is shaped and dimensioned to receive, and to form an electrical connection with, an electrical connector for connecting the charging port to an external power supply, such as a mains power supply.

The battery receiving aperture 4016 is formed at an interface between the first arm portion 4012 and the second arm portion 4018, and is positioned such that an open periphery of the battery receiving aperture 4016 faces in a direction away from the upper base body 4008. The battery receiving aperture 4016 is shaped and dimensioned to receive the first sleeve portion 2042 of the inner sleeve 2016 of the battery assembly 2000. The battery receiving aperture 4016 houses electrical connections such that the battery assembly 2000 can be connected to a power supply for recharging, via the charging port 4014. In some examples, the battery receiving aperture is omitted.

The second arm portion 4018 is integrally formed with the first arm portion 4012, and extends away from the first arm portion 4012 such that an angle of about 45 degrees is formed between the first arm portion 4012 and the second arm portion 4018. The second arm portion 4018 extends inwardly from the first arm portion 4012 towards a central dock axis D, but does not reach the central dock axis D.

The third arm portion 4020 is integrally formed with the second arm portion 4018 and extends away from the second arm portion 4018 such that the third arm portion 4020 extends in a direction substantially parallel to the first arm portion 4012.

The third arm portion 4020 is generally convex in form, and an arm insert 4034 is located within the curved recess define by the third arm portion 4020. The arm insert 4034 has an internal curvature generally corresponding to a curvature of the second tubular body 3026 of the cleanerhead 3000, and defines a cleanerhead receiving channel 4035. It will be appreciated that the arm insert 4034 can also be considered to define an abutment surface for abutting the second tubular body 3026 of the cleanerhead 3000. The arm insert 4034 acts to retain the locating magnet 4022, and the first 4024 and second 4026 sprung charging contacts relative to the third arm portion 4020.

The locating magnet 4022 is positioned on the third arm portion 4020 at a certain height from the upper base body 4008 such that it is aligned with the locating magnetic portion 3038 when the cleanerhead is rested on the dock 4000. The locating magnet 4022 comprises 2 magnets stacked together to increase the magnetic strength.

The first 4024 and second 4026 sprung charging contacts are electrically connected to the charging port 4014 by cabling that extends through the first 4012, second 4018, and third 4020 arm portions. Each of the first 4024 and second 4026 sprung charging contacts extends through a corresponding aperture formed in the arm insert 4034, such that contact faces of the first 4024 and second 4026 sprung charging contacts are exposed. The first 4024 and second 4026 sprung charging contacts are located at the same height as the locating magnet 4022. The first 4024 and second 4026 sprung charging contacts are each located around 90 degrees away from the locating magnet 4022 about a periphery of the third arm portion 4020, with the locating magnet 4022 being positioned centrally between the first 4024 and second 4026 sprung charging contacts.

The first 4028 and second 4030 tool storages are each substantially similar in form, and are shaped and dimensioned to receive a tool for attaching to the main unit 12 of the vacuum cleaner 10 such that the tool is held relative to the dock 4000. The first 4028 and second 4030 tool storages extend from an opposite side of the third arm portion 4020 to the cleanerhead receiving channel 4035.

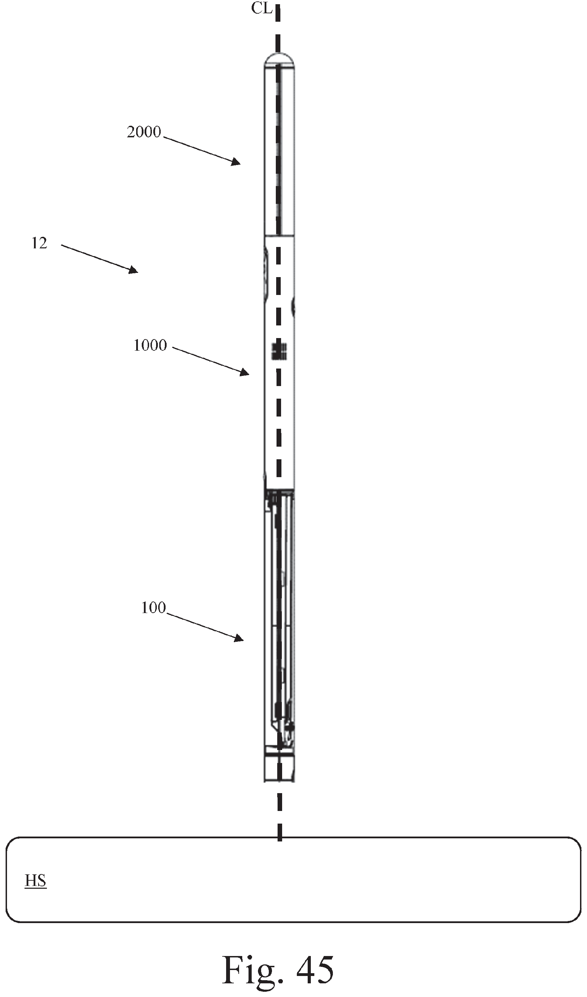

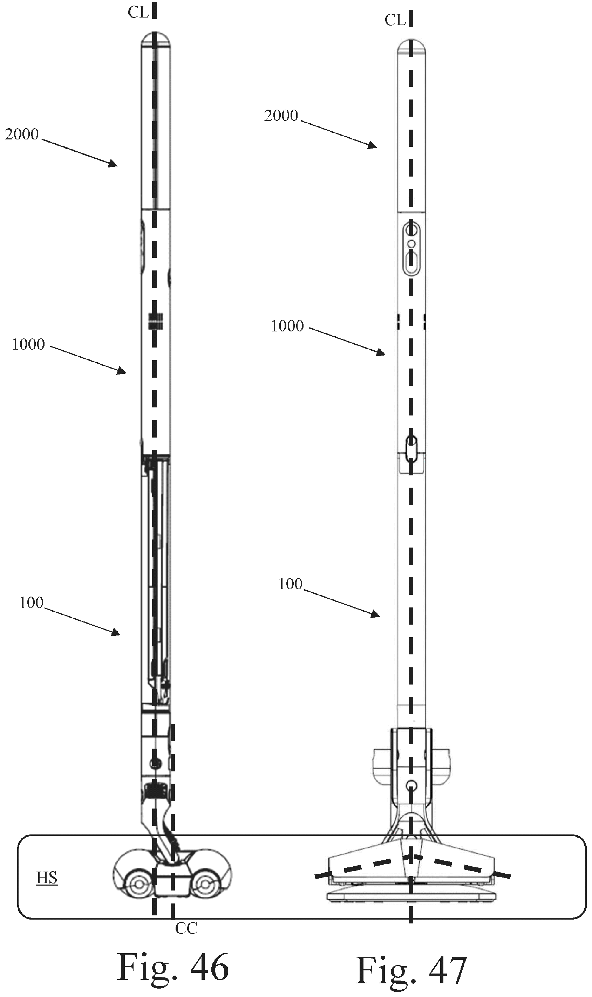

The main unit 12 is shown in an assembled, cleaning, configuration in Figure 45, with the cleanerhead 3000 shown attached to the main unit 12 in an assembled, cleaning, configuration, in Figure 46. Figure 47 shows the front view of the vacuum cleaner 10 resting on the dock 4000.

With the main unit 12 in an assembled, cleaning, configuration, the bin assembly 102 is located such that the central bin axis B of the bin body 108 is coaxial with a central longitudinal axis CL of the main unit 12. Thus the bin body 108 extends annularly about the central longitudinal axis CL of the main unit 12. The filter assembly 200 and the core 300 are housed within the bin body 108, with the bin catch 1040 of the motor housing 1002 engaged with the latching member 148 of the bin catch receiving portion 144 of the second connecting cuff 112 to retain the bin assembly 102 relative to the motor housing 1002. With the filter assembly 200 and the core 300 housed within the bin body 108, the debris collection chamber 122 of the separation system 100 occupies about 30% to 40% of bin body 108 and has a self-compacting arrangement, where dust entering the debris collection chamber 122 are compacted against the wiper 114. This is due to the filter assembly 200 being arranged parallel to the 300 housed within the bin body 108 and the suction motor 1004 being arranged downstream of the separation system 100.

The core 300 is positioned within the bin assembly 102 such that the electrical connection portion 318 of the core 300 overlies the inner surface 134 of the planar portion 126 of the first connecting cuff 110, with the gap 136 defined between the inner surface 134 and the electrical connection portion 318. The valve member 366 of the valve assembly 304 is engaged with the valve seat 135 such that the valve member 366 blocks the airflow inlet 140. The hinge axis H of the valve base 340 of the valve assembly extends in a direction orthogonal to the central longitudinal axis CL of the main unit 12.

The guide rails 120 of the bin body 108 are positioned such that the guide rails 120 extend in a direction substantially parallel to the central longitudinal axis CL of the main unit 12. The guide rails 120 are located upon the guide surfaces 332 of the core body 302 of the core, and are positioned such that the guide rails 120 are axially aligned, in a direction parallel to the central longitudinal axis CL of the main unit 12, with a corresponding one of the first 358 and second 360 contact portions of the rigid member 344 of the valve assembly 304.

The filter assembly 200 is located such that the locating projection 250 of the core connecting portion 248 is received within the locating channel 311 of the core 300, proximal to the outlet duct 314, and such that the end wall clip 224 and the end wall lip 246 of the filter assembly are located distally from the outlet duct 314. The upper rim 242 of the lower tray 2042 is supported on the upper periphery 328 of the outlet channel 310 of the core body 302, such that a lower region of the filter media main body 230 is located within the outlet channel 310. The lower tray 2042, the filter media main body 230, and the outlet channel 310, partly define the airflow outlet 330 of the separation system 100. The portion of airflow outlet 330 defined by the outlet channel 310 is spaced from the central longitudinal axis CL of the main unit 12. The filter assembly 200, and hence the primary mesh 202 and the filter media 208, acts to divide the coarse debris collection chamber 122 and the outlet channel 310.

An upstream face of the primary mesh 202 faces away the central longitudinal axis CL of the main unit 12, and hence away from the central axis B of the bin body 108. The primary mesh 202 and the filter media 208 are spaced apart from one another in a direction orthogonal to the central longitudinal axis CL of the main unit 12, which may be considered a transverse direction, of about 1.4mm. The primary mesh 202 and the filter media 208 each are elongate with parallel longitudinal axes, and longitudinally overlap one another. The parallel longitudinal axes of the primary mesh 202 and the filter media 208 are also parallel with a direction of a bulk airflow from the airflow inlet 140 to the separation system 100. The generally U-shaped cross-section of the primary mesh 202 is such that a trough provided by the upstream face of the primary mesh 202 forms an airflow channel for air flowing from the airflow inlet 140 of the separation system 100.

The outlet duct 314 of the core body 302 is in fluid communication with the motor housing 1002, with the motor housing 1002 extending away from the bin body 108 in a direction along the central longitudinal axis CL of the main unit 12, and extending annularly about the central longitudinal axis CL of the main unit 12. The suction motor 1004 is positioned within the motor housing 1002 such that the impeller 1056 of the suction motor 1004 is located proximal to the outlet duct 314, with the stator assembly 1042 of the suction motor 1004 located downstream of the impeller 1056. The motor control circuit board 1006 is located downstream of the suction motor 1004 within the motor housing 1002, with the first portion 1066 of the motor control circuit board 1006 located within the PCB receiving portion 1078 of the electronics chassis 1012. The first portion 1066 of the motor control circuit board 1006 defines a plane extending in a direction parallel to the rotational axis R of the suction motor 1004, and a major axis of the first portion 1066 of the motor control circuit board 1008 extends in a direction parallel to the rotational axis R of the suction motor 1004. The major axis of the first portion 1066 of the motor control circuit board 1008 can also be considered to extend in a direction parallel to the row of battery cells 2002, and parallel to a central axis of the separation system 100. The motor housing 1002, the PCB receiving portion 1078 of the electronics chassis 1012, and the electrical connection housing 1080 of the electronics chassis define motor outlet passageways within the motor housing 1002.

The first 1036 and second 1038 airflow outlets are in fluid communication with the motor outlet passageways 1079, with the first 1036 and second 1038 airflow outlets positioned such that airflow leaves the motor housing 1002 in a direction substantially orthogonal to the central longitudinal axis CL of the main unit 12 forming a Y shaped airflow from the motor housing to the first 1036 and second 1038 airflow outlets. The LCD screen 1100, the power button 1108 and the mode button 1100 are located on a same side of the motor housing 1000 as the bin catch 1040 of the motor housing 1002, with the LCD screen 1100, the power button 1108, and the mode button 1110 facing in a direction orthogonal to the central longitudinal axis CL of the main unit 12, and orthogonal to the directions in which airflow exits the motor housing 1000 via the first 1036 and second 1038 airflow outlets.

The battery assembly 2000 is positioned such that the longitudinal battery housing axis BH is coaxial with the central longitudinal axis CL of the main unit 12. The first sleeve portion 2042 of the inner sleeve 2016 of the battery assembly 2000 is located within the housing insert 1024 of the motor assembly 1000, with the interface portion 2046 of the first sleeve portion 2042 underlying, and in contact with, the planar internal surface 1123 of the housing insert 1024. The power terminals 2010 of the battery assembly 2000 are connected to the power terminal 1010 of the motor assembly 1000, such that electrical power can be communicated between the battery assembly 2000 and components within the motor housing 1000. The communications terminals 2012 of the battery assembly 2000 are connected to the communications connection 1086 of the harness assembly 1013, such the communication is established between the battery assembly and components within the motor housing 1000.

The locating recess 2048 of the first sleeve portion 2042 is engaged with the hook 1094 of the battery catch mechanism 1022 of the motor assembly 1000, thereby retaining the first sleeve portion 2042 within the housing insert 1024, and retaining the battery assembly 2000 relative to the motor assembly 1000.

The outer sleeve 2018 extends away from the motor housing 1002, and away from the bin assembly 1002, in a direction parallel to the central longitudinal axis CL of the main unit 12. The outer sleeve extends away from the motor housing 1002 by an axial extent of around 24cm measured in a direction parallel to the central longitudinal axis CL of the main unit 12, and defines a handle by which a user can grasp the main unit 12 to move the vacuum cleaner 10 relative to a surface to be cleaned. The row of battery cells 2002 extend in a direction parallel to, but displaced from, the central longitudinal axis CL of the main unit 12.

As can be seen from Figure 45, with the main unit 12 assembled, the separation system 100, the motor assembly 1000, and the battery assembly 2000, are aligned along, and share, the central longitudinal axis CL of the main unit 12. In an alternative example, the alignment of the separation system 100, the motor assembly 1000 and the battery assembly 2000 may be referred to as the components being arranged in-line. The suction motor 1004 is located between the separation system 100 and the battery assembly 2000. The separation system 100, the suction motor 1004, and the battery assembly 200 can also be considered to be aligned along the central longitudinal axis CL of the main unit 12. Similarly, central axes of any of the separation system 100, the suction motor 1004, and the battery assembly 2000 can be considered to be coaxial with the central longitudinal axis CL of the main unit 12.

Each of the separation system 100, the motor assembly 1000, and the battery assembly, are elongate and generally tubular in form, such that the main unit 12 is elongate and tubular in form. This gives the main unit 12 a pole structure or also known as a single tubular structure. The main unit 12 has a total axial length of about 95cm measured in a direction parallel to the central longitudinal axis CL of the main unit 12. The separation system 100 is about 38cm of the total axial length of the main unit, corresponding to 40% of the axial length of the main unit 12. The motor assembly 1000 constitutes 33cm of the total axial length of the main unit, corresponding to about 35% of the axial length of the main unit 12. The battery assembly 2000 constitutes 24cm of the total axial length of the main unit, corresponding to about 25% of the axial length of the main unit 12. A length of the motor housing 1002 in a direction along the central longitudinal axis CL of the main unit 12 is less than a length of the bin body 108 in a direction along the central longitudinal axis CL of the main unit 12. When the separator housing, the motor housing 1002, and the battery housing, are coupled together they define the main unit 12 of the vacuum cleaner 10.

The length of the motor assembly 1000 is more than the exposed part of the battery assembly 2000. When disassembled, the battery assembly 2000 is slightly longer than motor assembly 1000 by about 1cm.

Each of the bin body 108, the motor housing 1002 of the motor assembly, and the outer sleeve 2018 of the battery assembly 2000, define outer surfaces of the main unit 12. Each of the bin body 108, the motor housing 1002 of the motor assembly, and the outer sleeve 2018 of the battery assembly 2000, share a common outer diameter of 38mm, so that the main unit 12 has a substantially constant outer diameter of 38mm. In an alternative example, the main unit 12 has a maximum outer diameter, and one or more of the bin body 108, the motor housing 1002 of the motor assembly, and the outer sleeve 2018 of the battery assembly 2000 share the maximum outer diameter of 38mm. In a further example, each of the bin body 108, the motor housing 1002 of the motor assembly, and the outer sleeve 2018 of the battery assembly 2000 share the maximum outer diameter of 38mm. The maximum outer diameter may be 50mm or less.

With the central longitudinal axis CL of the main unit 12 arranged substantially vertically relative to a horizontal surface HS to be cleaned, and an end of the main unit 12 corresponding to the first connecting cuff 110 of the bin assembly 102 located closer to the horizontal surface HS to be cleaned than the outer sleeve 2018 of the battery assembly 2000, the motor assembly 1000 is located above the separation system 100. Such an orientation of the main unit 12 can be seen in Figure 45.

With the central longitudinal axis CL of the main unit 12 arranged substantially vertically relative to a horizontal surface HS to be cleaned, and an end of the main unit 12 corresponding to the first connecting cuff 110 of the bin assembly 102 located closer to the horizontal surface HS to be cleaned than the outer sleeve 2018 of the battery assembly 2000, the battery assembly 2000 is located above the separation system 100. Such an orientation of the main unit 12 can be seen in Figure 45.

With the central longitudinal axis CL of the main unit 12 arranged substantially vertically relative to a horizontal surface HS to be cleaned, and an end of the main unit 12 corresponding to the first connecting cuff 110 of the bin assembly 102 located closer to the horizontal surface HS to be cleaned than the outer sleeve 2018 of the battery assembly 2000, a portion of the battery assembly 2000 is located above the motor assembly 1000. Such an orientation of the main unit 12 can be seen in Figure 45.

With the cleanerhead 3000 connected to the main unit 12, the main unit 12 and the neck portion 3004 of the cleanerhead 3000 share a common central axis, which is the central longitudinal axis CL of the main unit 12.

With the common central axis located vertically relative to a horizontal surface HS on which the cleanerhead 3000 is located, the main cleanerhead housing 3002 has a generally rectangular shape when viewed in a direction along the common central axis, and the common central axis is orthogonal to and intersects a central minor axis of the main cleanerhead housing 3002. The pairs of brushbars 3014 are such that brushbars of each pair are located on opposing sides of the central minor axis to one another.

With the cleanerhead 3000 connected to the main unit 12, the cleanerhead 3000 sitting on a horizontal surface to be cleaned HS, and with the central longitudinal axis CL of the main unit 12 arranged substantially vertically relative to the horizontal surface HS to be cleaned, the cleanerhead central axis CC is parallel to, but spaced apart from, the central longitudinal axis CL of the main unit 12. An orthogonal distance between the cleanerhead central axis CC and the central longitudinal axis CL of the main unit 12 is around 20mm.

With the cleanerhead 3000 connected to the main unit 12, and the cleanerhead 3000 sitting on a horizontal surface to be cleaned HS, and with the central longitudinal axis CL of the main unit 12 arranged substantially vertically relative to the horizontal surface HS to be cleaned, axes of rotation of each of the brushbars 3014 are obliquely angled relative to the central longitudinal axis CL of the main unit 12 as shown in figure 47.

With the cleanerhead 3000 connected to the main unit 12, the engagement end 158 of the bin interlock member 115 is biased upwards by the free end 3030 of the neck portion 3004 of the cleanerhead 3000, and the engagement end 158 of the bin interlock member 115 is engaged with the abutment surface 338 of the electrical connection portion 318 to inhibit motion of the bin body 108 relative to the core 300. The cleanerhead catch 3040 of the neck portion 3004 of the cleanerhead 3000 is engaged with the engagement lip 142 of the first connecting cuff 110 to retain the cleanerhead 3000 relative to the main unit 12.

In use, a user can utilise the power button 1108 to turn on the vacuum cleaner 10, with electrical power being provided from the battery assembly 2000 to the suction motor 1004. The vacuum cleaner 10 is operable in one of a low power mode, a medium power mode, or a high power mode. Upon initial turn-on of the vacuum cleaner 10, the vacuum cleaner operates in the medium power mode, with the user able to toggle the mode button 1110 to switch through the operating modes. One skilled in the art will recognise that the default operating mode upon turn-on may be configured to low power mode or high power mode and the actual operating mode to be implemented is left as a design choice. The suction motor 1004 causes rotation of the impeller 1056, which generates an airflow through the main unit 12 and the cleanerhead 3000.

The user can grasp the outer sleeve 2018 of the battery assembly 2000, which defines a handle portion of the main unit 12, and by moving their arm can in turn manoeuvre the cleanerhead 3000 over the surface to be cleaned. Electrical power is provided from the battery assembly 2000 to the cleanerhead 3000 via the harness assembly 1013, the electrical connection portion 318 of the core 300, and the cleanerhead electrical connection portion 3036 of the cleanerhead 3000. The drive motors 3014 drive rotation of the brushbars 3012 within the internal chamber 3006, with the brushbars 3012 acting to agitate the surface to be cleaned. The drive motors 3014 drive rotation of the brushbars 3012 to spin in a manner such that dust from the surface are agitated towards the central axis CC of the cleanerhead.

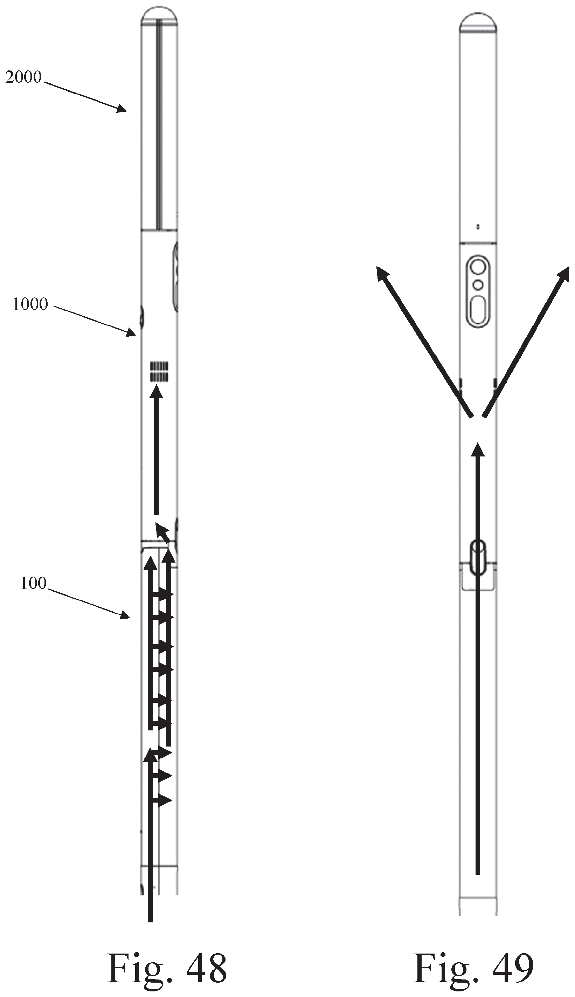

A path of airflow through the vacuum cleaner 10 is illustrated schematically in Figures 48 and 49. Airflow enters the cleanerhead 3000 via the airflow inlet 3010 along with entrained debris such as dust. Airflow passes through the internal chamber 3006, and exits the cleanerhead 3000 via the flexible duct 3018 and the free end 3030 of the second tubular body 3026 of the neck portion 3004.

Airflow passes into the separation system 100 via the first connecting cuff 110, and flows through the airflow inlet 140. The force of airflow through the vacuum cleaner 10 causes the valve member 366 to pivot from its closed position to its open position in the downstream direction to enable airflow to enter the interior volume of the bin body 108 via the airflow inlet 140. A bulk direction of airflow at the airflow inlet 140 is in a direction away from the airflow inlet 140, and substantially parallel to the central longitudinal axis CL of the main unit 12. The bulk direction of airflow at the airflow inlet 140 can be thought of as being in a direction from a bottom of the bin assembly 102 to the top of the bin assembly 102 when the central longitudinal axis CL of the main unit 12 is arranged substantially vertically relative to a horizontal surface HS to be cleaned, and an end of the main unit 12 corresponding to the bin assembly 102 is located closer to the horizontal surface HS to be cleaned than the battery assembly 2000. Due to this arrangement, dust would be compacted against the wiper 114.

Airflow flowing through the bin body 108 flows over the primary mesh 202 of the separator cartridge 200 in a bulk direction generally parallel to the central longitudinal axis CL of the main unit 12. As the airflow flows over the primary mesh 202 the airflow passes through the through-holes of the primary mesh 202, with the primary mesh 202 acting to filter out relatively large debris from the airflow. Such filtered debris is collected within the coarse debris collection chamber 122 defined by the bin body 108. The valve assembly 304 covers at least a portion of a base of the chamber 122 and is such that the airflow inlet 140 to the separation system 100 is provided in a plane of the valve assembly 304. Airflow therefore enters the chamber 122 at the valve assembly 304, doing so in a manner as described above.

Airflow that has passed through the primary mesh 202 then flows over and through the filter media 208 in a direction substantially orthogonal to the central longitudinal axis CL of the main unit 12. The filter media 208 acts to filter debris from the airflow, with such debris being relatively fine in comparison to the debris filtered out by the primary mesh 202. Filtered debris accumulates on the filter media 208, and airflow passes from the filter media 208 toward the auxiliary mesh 312.

Airflow flows through the auxiliary mesh 312 in a direction substantially orthogonal to the central longitudinal axis CL of the main unit 12. The auxiliary mesh 312 may be similar to the primary mesh and acts to prevent debris from entering the outlet channel 310 during removal of the filter assembly 200. In another embodiment, the auxiliary mesh 312 acts to filter debris from the airflow, with such debris being relatively fine in comparison to the debris filtered out by the filter media 208. Filtered debris accumulates on the auxiliary mesh 312, and airflow passes from the auxiliary mesh 312 into the outlet channel 310. Airflow flows through the outlet channel 310 and through the outlet duct 314, leaving the separation system 100 and entering the motor assembly 1000.

Airflow passes through the impeller and then through the diffuser stage 1058 in a bulk direction substantially parallel to the central longitudinal axis CL of the main unit 12. Airflow exits the diffuser stage 1058, and is split over the PCB receiving portion 1078 of the electronics chassis 1012 of the motor assembly 1000. Airflow is thus located on opposing sides of the plane defined by the first portion 1066 of the motor control circuit board 1008. Airflow flows through the motor outlet passageways 1079 toward the first 1036 and second 1038 airflow outlets. Airflow then exits the motor housing 10002 via the first 1036 and second 1038 airflow outlets forming a Y shaped airflow as shown in figure 49.

In use of the vacuum cleaner 10, the coarse debris collection chamber 122 fills with debris. Thus it may be desirable for the user to empty debris from the coarse debris collection chamber 122. To do so, the user must first remove the cleanerhead 3000 from the main unit 12. The user can release the cleanerhead catch 3040 of the neck portion 3004 of the cleanerhead 3000 from engagement with the engagement lip 142 of the first connecting cuff 110, and the main unit 12 can be slid away from the cleanerhead 12 in a direction substantially parallel to the central longitudinal axis CL of the main unit 12.

With the free end 3030 of the neck portion 3004 of the cleanerhead 3000 removed from the first connecting cuff 110, the free end 3030 of the neck portion 3004 is no longer engaged with the engagement end 158 of the bin interlock member 115, and the engagement end 158 of the bin interlock member 115 is no longer engaged with the abutment surface 338 of the electrical connection portion 318 of the core 300. Thus the bin interlock member 115 no longer inhibits motion of the bin body 108 relative to the core 300.

The user can release the bin catch 1040 from engagement with the bin catch receiving portion 144, and by grasping the bin body 108 can slide the bin body 108 away from the motor assembly 1000. The bin body 1008 slides away from the motor assembly 1000 in a direction substantially parallel to the central longitudinal axis CL of the main unit 12. As the bin body 108 slides away from the motor assembly 1000, the guide rails 120 slide along the guide surfaces 332 of the body 302 of the core, and contact the respective first 358 and second 360 contact portions of the rigid member 344 of the valve assembly 304.

As the bin body 108 continues to slide, contact of the guide rails 120 with the respective first 358 and second 360 contact portions of the rigid member 344 of the valve assembly 304 pushes the valve member 366 to, and holds the valve member 366 in, its open, upstream, position. In such a position the valve member 366 lies substantially parallel to the central longitudinal axis CL of the main unit 12, and debris is able to pass the valve member 366 and fall out of the first connecting cuff 110 of the bin assembly 102. As the bin body 108 slides relative to the core 300, the wiping member 152 contacts the upstream face of the primary mesh 202 to wipe debris from the upstream face of the primary mesh 202, with such debris able to pass the valve member 366 and fall out of the first connecting cuff 110 of the bin assembly 102.

The bin body 108 is slid away from the motor assembly 1000 until the bin assembly 102 is separate from, and no longer covers, the filter assembly 200 and the core 300. This enables the user to remove the filter assembly 200 from the core 300, by moving the filter assembly 200 away from the core 300 in a direction substantially orthogonal to the central longitudinal axis CL of the main unit 12. As the filter assembly 200 is removed from the core 300, the auxiliary mesh 312 can catch debris that falls from the separator cartridge 200, thereby inhibiting large debris from collecting in the outlet channel 310 of the core body 302.

Once the filter assembly 200 is removed from the core 300, the user can separate the mesh carrier 204 from the upper 2041 and lower 2042 trays, and hence separate the primary mesh 202 from the filter media 208, by releasing the end wall clip 224 of the mesh carrier 204 from the end wall lip 246 of the lower filter frame 210, and sliding the mesh carrier 204 away from the upper 2041 and lower 2042 trays. The user can then clean the upper tray 2041 with the primary mesh 202, and lower tray 2042 with the filter media 208 separately.

When desired, the user can reassemble the filter assembly 200, and reattach the filter assembly 200 to the core body 302. In one embodiment where a hygroscopic filter media 208 is used, if the filter media 208 is still wet, the filter media 208 will swell beyond the cage preventing the upper 2041 and lower 2042 trays form being assembled together. The bin body 108 can be slid back over the combined filter assembly 200 and core 300, and reattached to the main unit 12. The cleanerhead 3000 can be reattached to the main unit 12 such that the user can resume cleaning, if desired, or store the vacuum cleaner 10 if cleaning is completed.

To store the vacuum cleaner 10, the user 10 can position the vacuum cleaner 10 relative to the dock 4000. The dock 4000 is freestanding upon a horizontal surface to be cleaned. To position the vacuum cleaner 10 relative to the dock 4000, the cleanerhead 3000 is located upon the upper base body 4008 of the dock 4000, such that the main cleanerhead housing 3002 abuts the cleanerhead abutment surface 4032 of the first arm portion 4012 of the retention arm 4004. The second tubular body 3026 of the neck portion 3004 of the cleanerhead 3000 is located within the cleanerhead receiving channel 4035 within the third arm portion 4012, such that the cleanerhead 3000 contacts the dock 4000 at two spaced apart, vertical, locations. The retention arm 4004 can be considered to partially surround the main cleanerhead housing 3002 when the cleanerhead 3000 is located on the dock 4000. The contact between the dock 4000 and the cleanerhead 3000 at the two locations, which portions of the dock 4000 can be considered abutment portions of the dock, can act to maintain the vacuum cleaner 10 in a substantially upright position relative to a horizontal surface to be cleaned, when the cleanerhead 3000 is located in the dock 4000.

With the second tubular body 3026 of the neck portion 3004 of the cleanerhead 3000 located within the cleanerhead receiving channel 4035, the locating magnet 4022 of the dock 4000 interacts with the locating magnetic portion 3038 of the cleanerhead 3000 to retain the cleanerhead 3000, and hence the vacuum cleaner 10 more generally, relative to the dock 4000. The position of the vacuum cleaner 10 within the dock 4000 can be considered to be an upright position, and/or a vertical position. The first 4024 and second 4026 sprung charging contacts of the dock 4000 are in contact with the first and second charging contacts 3032 of the second tubular body 3026 of the cleanerhead 3000. With a power supply electrically connected to the charging port 4014 of the dock 4000, electrical power can be transmitted from the dock 4000 to the cleanerhead 3000, and from the cleanerhead 3000 through the main unit 12 to the battery assembly 2000, to recharge the battery assembly 2000.

An additional battery assembly can also be charged in parallel with the battery assembly 2000 being charged via the cleanerhead, with the additional battery assembly located within the battery receiving aperture 4016.

It will also be appreciated that the battery assembly 2000 can be charged via the battery receiving aperture 4016, without needing to be charged via the cleanerhead 3000, either when the remainder of the vacuum cleaner 10 is held by the dock, or when the remainder of the vacuum cleaner 10 is located remotely from the dock.

To remove the battery assembly 2000 from the motor housing 1000, the user can actuate the battery catch mechanism 1022 to remove the hook 1094 from engagement with the locating recess 2048 of the battery assembly 2000, thereby enabling the battery assembly 2000 to slide relative to the motor assembly 1000. The user can grasp the outer sleeve 2018 of the battery assembly 2000 and slide the battery assembly 2000 away from the motor assembly in a direction parallel to the central longitudinal axis CL of the main unit 12.

Alterative tools to the cleanerhead 3000 can also be used interchangeably with the main unit 12, which such tools connecting to the main unit 12 in a similar manner to that described for the cleanerhead 3000 above. It will be appreciated that such alternative tools may not necessarily include charging capability, but may still include motorised components such as driven brushbars or the like.

It will be appreciated the separation system 100 may be considered to be a separator, a dirt separator, a debris separator, a dirt separation system, or a debris separation system, in the context described herein.

It is to be understood that any feature described in relation to any one example may be used alone, or in combination with other features described, and may also be used in combination with one or more features of any other of the examples, or any combination of any other of the examples. Furthermore, equivalents and modifications not described above may also be employed without departing from the scope of the accompanying claims.

## Claims

1. A separation system for a vacuum cleaner, the separation system comprising:
a bin body;
a chamber formed by an internal volume of the bin body, the chamber having an airflow inlet;
a valve for controlling airflow through the airflow inlet into the chamber; and
a filter assembly disposed in the chamber for filtering airflow from the airflow inlet,
wherein:
the valve covers at least a portion of a base of the chamber;
the airflow inlet is provided in a plane of the valve such that the airflow enters the chamber at the valve;
the valve is moveable to a first open position in response to airflow through the separation system to enable airflow to enter the chamber via the airflow inlet; and
the valve is moveable to a second open position in response to movement of the bin body to allow debris collected within the chamber to pass the valve.

2. The separation system of claim 1, wherein the filter assembly extends along a length direction and has a generally U-shaped cross-sectional shape, when viewed along the length direction.

3. The separation system of claim 2, wherein an upstream surface of the filter assembly provides a generally U-shaped airflow channel for the bulk airflow from the air inlet.

4. The separation system of claim 2 or 3, wherein a curvature of the filter assembly is relatively shallow such that free ends of the U-shaped cross-sectional shape face generally away from one another.

5. The separation system of any preceding claim, wherein the filter assembly extends in a first direction, and the separation system is configured such that, in use, a bulk airflow from the airflow inlet into the chamber is in a second direction which is substantially parallel to the first direction, and the bulk airflow from the airflow inlet flows through the filter assembly in a direction orthogonal to the first direction.

6. The separation system of claim 5, wherein the filter assembly comprises a first filter and a second filter, the second filter being arranged with respect to the first filter such that air flows through and is filtered by the second filter after having flowed through and been filtered by the first filter, the second filter extending in a third direction parallel to the first and the second directions.

7. The separation system of claim 6, wherein the second filter is positioned to underlie the first filter.

8. The separation system of claim 6 or 7, wherein, in use, a direction of airflow through the second filter is generally orthogonal to the third direction.

9. The separation system of any one of claims 6 to 8, wherein the second filter has a cross-sectional shape which, when viewed along the third direction, is different to a cross-sectional shape of the first filter, when viewed along the first direction.

10. The separation system of claim 9, wherein the second filter has a substantially flat cross-sectional shape, when viewed along the third direction.

11. The separation system of any preceding claim, comprising an outlet channel into which, in use, a filtered airflow flows after flowing through the filter assembly, wherein the outlet channel is positioned to underlie the filter assembly.

12. The separation system of claim 11 when dependent on claim 5, wherein the outlet channel extends in a fourth direction which is parallel to and offset from the first and second directions.

13. The separation system of any preceding claim, wherein:
the filter assembly comprises an upstream face which is downstream of the airflow inlet;
the chamber comprises a longitudinal axis; and
the upstream face of the filter assembly is asymmetrically disposed in the chamber with respect to the central longitudinal axis.

14. The separation system of claim 13, wherein the upstream face of the filter assembly is spaced from and faces towards the central longitudinal axis of the chamber.

15. The separation system of any preceding claim, wherein:
the separation system comprises a bin assembly and a core;
the bin assembly comprises the bin body and a bin interlock member; and
the bin interlock member is configured to inhibit removal of the bin body from the core when a cleanerhead is attached to the vacuum cleaner.
